# EUROPEAN PATENT APPLICATION

(11) **EP 4 668 804 A1**
(43) Date of publication of application: **24.12.2025**
(21) Application number: 24791800.6
(22) Date of filing: 20.03.2024
(51) Int. Cl.: H04W 8/18

(54) **COMMUNICATION METHOD AND COMMUNICATION APPARATUS**

(30) Priority: 19.04.2023 CN 202310445911
(71) Applicant: Huawei Technologies Co., Ltd., Shenzhen, Guangdong 518129 (CN)
(72) Inventor: LI, Yongcui, Shenzhen, Guangdong 518129 (CN); LI, Yan, Shenzhen, Guangdong 518129 (CN)
(74) Representative: Maiwald GmbH
(86) International application number: PCT/CN2024/082744
(87) International publication number: WO 2024/217213

(57) **Abstract**

This application provides a communication method and a communication apparatus, and relates to the communication field. The communication method is applied to a network element selection function device, and includes: obtaining an address of a first core network element in a first area, where the network element selection function device is located in a second area; and sending first information, where the first information is used by a second core network element in the second area to obtain the address of the first core network element in the first area, and the second core network element is configured to transmit signaling of a terminal device based on the address of the first core network element. The first area is a roaming area of the terminal device, and the second area is a home area of the terminal device; or the first area is a home area of the terminal device, and the second area is a roaming area of the terminal device. In this way, a connection between a core network element in the roaming area and a core network element in the home area can be established, allowing a network operator in the home area to obtain communication data of the terminal device, thereby helping improve interests of the network operator.

## Description

This application claims priority to Chinese Patent Application No. 202310445911.4, filed with the China National Intellectual Property Administration on April 19, 2023 and entitled "COMMUNICATION METHOD AND COMMUNICATION APPARATUS", which is incorporated herein by reference in its entirety.

### TECHNICAL FIELD

This application relates to the communication field, and in particular, to a communication method and a communication apparatus.

### BACKGROUND

As a terminal device moves, the terminal device may move from its home area to a roaming area. If the terminal device establishes a signaling transmission channel with a network in the roaming area, a network in the home area cannot learn of signaling transmission of the terminal device. Consequently, a network operator in the home area cannot learn of communication data of the terminal device, affecting interests of the network operator in the home area.

### SUMMARY

In view of this, this application provides a communication method and a communication apparatus, to establish a connection between a roaming area and a home area, allowing a network operator in the home area to obtain communication data of a terminal device, thereby helping improve interests of the network operator.

To achieve the foregoing objective, a first aspect provides a communication method, applied to a network element selection function device. The communication method includes: obtaining an address of a first core network element in a first area, where the network element selection function device is located in a second area; and sending first information, where the first information is used by a second core network element in the second area to obtain the address of the first core network element in the first area, and the second core network element in the second area is configured to transmit signaling of a terminal device based on the address of the first core network element in the first area; and the first core network element in the first area includes a policy control function network element in the first area, and the second core network element in the second area includes a policy control function network element in the second area; or the first core network element in the first area includes a session management function network element in the first area, and the second core network element in the second area includes a session management function network element in the second area, where the first area is a roaming area of the terminal device, and the second area is a home area of the terminal device; or the first area is a home area of the terminal device, and the second area is a roaming area of the terminal device.

In the foregoing solution, the network element selection function device in the second area may obtain the address of the first core network element in the first area, and send the first information, where the first information is used by the second core network element in the second area to obtain the address of the first core network element in the first area, and the second core network element in the second area is configured to transmit the signaling of the terminal device based on the address of the first core network element. In other words, when the first area is a home area of the terminal device and the second area is a roaming area of the terminal device, the network element selection function device in the roaming area may obtain the address of the core network element in the home area, and the network element selection function device in the roaming area sends the first information, where the first information may enable the core network element in the roaming area to obtain the address of the core network element in the home area. Similarly, when the first area is a roaming area of the terminal device and the second area is a home area of the terminal device, the network element selection function device in the home area may also obtain the address of the core network element in the roaming area. In this case, the network element selection function device in the home area sends the first information, where the first information may enable the core network element in the home area to obtain the address of the core network element in the roaming area. In this way, a connection between the core network element in the roaming area and the core network element in the home area can be established, so that a network operator in the home area can obtain communication data of the terminal device, thereby helping improve interests of the network operator.

Optionally, the network element selection function device may be a device configured to select a core network element based on a requirement of the terminal device. In other words, the network element selection function device may select the core network element based on the obtained requirement of the terminal device. For example, the requirement of the terminal device may be a requirement for establishing a protocol data unit (protocol data unit, PDU) session, or may be a requirement for establishing a policy of the terminal device.

Optionally, the network element selection function device may also be referred to as a network element selection function network element, a network element selection function entity, or the like.

Optionally, the roaming area may be an area in which the terminal device in a roaming state is currently located. Optionally, the roaming area may be substituted with a roaming location, or may be substituted with a visited area or a visited location.

Optionally, the home area may be a subscription location of the terminal device. Optionally, the home area may be substituted with a home location.

Optionally, the address of the first core network element in the first area may be an Internet Protocol (internet protocol, IP) address of the first core network element in the first area.

Optionally, that the second core network element in the second area is configured to transmit the signaling of the terminal device based on the address of the first core network element in the first area includes: The second core network element in the second area sends the signaling of the terminal device to the first core network element in the first area based on the address of the first core network element in the first area.

Optionally, the signaling of the terminal device may be a control plane instruction. For example, the control plane instruction may be a PDU session establishment request message, or may be a policy establishment request message of the terminal device.

Optionally, the first core network element in the first area and the second core network element in the second area have a same function. For example, the first core network element in the first area includes a policy control function network element in the first area, and the second core network element in the second area includes a policy control function network element in the second area; or the first core network element in the first area includes a session management function network element in the first area, and the second core network element in the second area includes a session management function network element in the second area. Alternatively, the first core network element in the first area includes a policy control function network element in the first area and a session management function network element in the first area, and the second core network element in the second area includes a policy control function network element in the second area and a session management function network element in the second area.

In some possible implementations, when the first area is a home area of the terminal device, and the second area is a roaming area of the terminal device, the sending the first information includes: sending the first information to the second core network element in the second area via an access network device in the second area, where the first information indicates the address of the first core network element in the first area.

In the foregoing solution, the network element selection function device in the roaming area sends the first information to the second core network element in the roaming area via the access network device in the roaming area. This indicates that the access network device in the roaming area only forwards the first information to the second core network element in the roaming area, but the access network device in the roaming area does not parse the first information and the second core network element in the roaming area parses the first information and obtains the address of the first core network element in the home area. In this way, the address of the first core network element in the home area cannot be obtained by the access network device in the roaming area, thereby improving security of the address of the first core network element in the home area.

Optionally, that the network element selection function device in the second area sends the first information to the second core network element in the second area via the access network device in the second area includes: The network element selection function device in the second area sends a container to the second core network element in the second area via the access network device in the second area, where the container includes the first information. In other words, the access network device in the second area does not parse the first information in the container.

Optionally, that the access network device in the second area sends the first information to the second core network element in the second area includes: The access network device in the second area obtains an address of the second core network element in the second area from the network element selection function device in the second area; and sends the first information to the second core network element in the second area based on the address of the second core network element in the second area.

In some possible implementations, when the first area is a home area of the terminal device, and the second area is a roaming area of the terminal device, the sending the first information includes: sending the first information to the second core network element in the second area via an access network device in the second area, where the first information indicates the second core network element in the second area to obtain the address of the first core network element in the first area.

In the foregoing solution, the first information indicates the second core network element in the roaming area to obtain the address of the first core network element in the home area, but the first information does not include the address of the first core network element in the home area. Therefore, the access network device in the roaming area cannot obtain the address of the first core network element in the home area based on the received first information, so that security of the address of the first core network element in the home area can be improved. In addition, encapsulation processing in a container form does not need to be performed on the address of the first core network element in the first area, where the address is determined by the network element selection function device in the roaming area. In this way, the address of the first core network element in the home area cannot be obtained by the access network device in the roaming area, and a function of the network element selection function device in the roaming area can be further simplified.

Optionally, that the first information indicates the second core network element in the second area to obtain the address of the first core network element in the first area may be understood as follows: The first information does not include the address of the first core network element in the first area, and does not indicate the address of the first core network element in the first area but may indicate the core network element in the second area to obtain the address of the first core network element in the first area, and the second core network element may obtain the address of the first core network element in the first area based on the first information.

Optionally, the first information is information indicating that the address of the first core network element in the first area needs to be obtained. In other words, the network element selection function device in the second area sends, to the second core network element in the second area via the access network device in the second area, the information indicating that the address of the first core network element in the first area needs to be obtained, to indicate the second core network element in the second area to obtain the address of the first core network element in the first area.

Optionally, the first information is roaming information of the terminal device. In other words, the network element selection function device in the second area sends the roaming information of the terminal device to the second core network element in the second area via the access network device in the second area, implicitly indicating the second core network element in the second area to obtain the address of the first core network element in the first area.

Optionally, when the first information is roaming information of the terminal device, the roaming information of the terminal device may indicate that the terminal device is in a roaming state.

Optionally, when the first information is roaming information of the terminal device, the roaming information of the terminal device may indicate that a roaming type of the terminal device is home routed (home routed, HR) roaming, or indicate that a roaming type of the terminal device does not support local breakout (local breakout, LBO) roaming.

Optionally, the roaming type of the terminal device may include HR roaming and LBO roaming. Optionally, HR roaming may mean that a terminal device accesses a data network via a user plane function network element in a home area. Optionally, LBO roaming may mean that a terminal device accesses a data network via a user plane function network element in a roaming area.

In some possible implementations, when the first area is a home area of the terminal device, and the second area is a roaming area of the terminal device, the sending the first information includes: sending the first information to a storage function network element in the second area, where the first information includes the address of the first core network element in the first area, and the second core network element in the second area is configured to obtain the address of the first core network element in the first area from the storage function network element in the second area.

In the foregoing solution, the network element selection function device in the roaming area sends the first information to the storage function network element in the roaming area, where the first information includes the address of the first core network element in the home area. In other words, the storage function network element in the roaming area stores the address of the first core network element in the home area, and the second core network element in the roaming area obtains the address of the first core network element in the home area from the storage function network element in the roaming area. In this way, the address of the first core network element in the home area cannot be obtained by the access network device in the roaming area, thereby improving security of the address of the first core network element in the home area. In addition, encapsulation processing in a container form does not need to be performed on the address that is of the first core network element in the home area and that is determined by the network element selection function device in the roaming area, so that a function of the network element selection function device in the roaming area can be simplified.

Optionally, the first information may further include the first identifier of the terminal device. Optionally, the first identifier of the terminal device may be a permanent identifier of the terminal device, or may be a temporary identifier of the terminal device. Optionally, the permanent identifier of the terminal device may be an identifier that is allocated by a network operator in the home area to the terminal device and that identifies an identity of the terminal device. Optionally, the temporary identifier of the terminal device may be an identifier that is allocated by the core network element in the roaming area accessed by the terminal device and that identifies an identity of the terminal device. For example, the temporary identifier of the terminal device may be an access and mobility management function network element or a session management function network element in the roaming area, or an identifier that is allocated by the access network device or the like and that identifies an identity of the terminal device.

Optionally, after the network element selection function device in the second area sends the first information to the storage function network element in the second area, the communication method further includes: The storage function network element in the second area receives the first information.

Optionally, after the storage function network element in the second area receives the first information, the communication method further includes: The storage function network element in the second area stores the first information.

Optionally, when the first information further includes the first identifier of the terminal device, that the storage function network element in the second area stores the first information includes: The storage function network element in the second area stores the address of the first core network element in the first area, the first identifier, and a correspondence between the first identifier and the address of the first core network element in the first area.

In some possible implementations, when the first area is a home area of the terminal device, and the second area is a roaming area of the terminal device, the communication method further includes: obtaining an address of the second core network element in the second area; and sending second information to the access network device in the second area, where the second information indicates the address of the second core network element.

In the foregoing solution, the network element selection function device in the roaming area may obtain the address of the second core network element in the roaming area, and send the address of the second core network element in the roaming area to the access network device in the roaming area. In this way, the access network device in the roaming area may establish a connection to the second core network element in the roaming area based on the address of the second core network element in the roaming area, and transmit signaling of the terminal device through the connection.

Optionally, the second information may be information including the address of the second core network element in the second area.

In some possible implementations, when the first area is a home area of the terminal device, and the second area is a roaming area of the terminal device, before the obtaining the address of the first core network element in the first area, the communication method further includes: obtaining a first identifier of the terminal device, first slice information of the first area, and second slice information of the second area; and obtaining subscription data of the terminal device from a unified data management function network element in the first area based on the first identifier of the terminal device; the obtaining the address of the first core network element in the first area includes: determining the address of the first core network element in the first area based on the first slice information of the first area and the subscription data; and the obtaining the address of the second core network element in the second area includes: determining the address of the second core network element in the second area based on the second slice information of the second area and the subscription data.

In the foregoing solution, the network element selection function device in the roaming area may obtain the first identifier of the terminal device, the first slice information of the home area, and the second slice information of the roaming area, determine the address of the first core network element in the home area based on the first slice information of the home area and the subscription data, and determine the address of the second core network element in the roaming area based on the second slice information of the roaming area and the subscription data. In this way, the network element selection function device in the roaming area may determine the address of the core network element in the roaming area in which the network element selection function device is located, and may also determine the address of the core network element in the home area, to establish a connection between the core network element in the roaming area and the core network element in the home area.

Optionally, the first slice information of the first area may indicate network slice selection assistance information (network slice selection assistance information, NSSAI) corresponding to the first area.

Optionally, when the first core network element is a session management function network element, the NSSAI corresponding to the first area may be obtained by mapping NSSAI requested by the terminal device in the second area, or may be obtained by mapping NSSAI allowable in the second area. Optionally, the NSSAI requested by the terminal device in the second area may belong to the NSSAI allowable in the second area. Optionally, the NSSAI allowable in the second area may be a set of slices available to the terminal device in the second area, and the NSSAI allowable in the second area may be determined by the access and mobility management function network element in the second area for the terminal device in a network registration and access process of the terminal device. Optionally, the network slice selection assistance information may be single network slice selection assistance information (single network slice selection assistance information, S-NSSAI).

Optionally, when the first core network element is a policy control function network element, the NSSAI corresponding to the first area may be obtained by mapping NSSAI allowable in the second area.

Optionally, the second slice information of the second area may indicate NSSAI corresponding to the second area.

Optionally, when the second core network element is a session management function network element, the NSSAI corresponding to the second area may be NSSAI requested by the terminal device in the second area, or may be NSSAI allowable in the second area.

Optionally, when the second core network element is a policy control function network element, the NSSAI corresponding to the second area may be NSSAI allowable in the second area.

Optionally, when the first identifier of the terminal device is a permanent identifier of the terminal device, that the network element selection function device in the second area obtains the subscription data of the terminal device from the unified data management function network element in the first area based on the first identifier of the terminal device includes: The network element selection function device in the second area sends the first identifier to the unified data management function network element in the first area; and the network element selection function device in the second area receives the subscription data of the terminal device corresponding to the first identifier from the unified data management function network element in the first area.

Optionally, when the first identifier of the terminal device is a temporary identifier of the terminal device, that the network element selection function device in the second area obtains the subscription data of the terminal device from the unified data management function network element in the first area based on the first identifier of the terminal device includes: The network element selection function device in the second area obtains, from the storage function network element in the second area, a second identifier of the terminal device corresponding to the first identifier, where the storage function network element is configured to store a correspondence between the first identifier and the second identifier, and the second identifier is a permanent identifier of the terminal device; the network element selection function device in the second area sends the second identifier to the unified data management function network element in the first area; and the network element selection function device in the second area receives, from the unified data management function network element in the first area, the subscription data of the terminal device corresponding to the second identifier.

Optionally, the storage function network element may be configured to store identification information of the terminal device. Optionally, the identification information of the terminal device may be a temporary identifier of the terminal device, or may be a permanent identifier of the terminal device, or may be a correspondence between a temporary identifier and a permanent identifier of the terminal device, or the like. Optionally, the storage function network element may also be referred to as a storage function entity or a storage device.

In some possible implementations, when the first area is a home area of the terminal device, and the second area is a roaming area of the terminal device, that the network element selection function device in the second area sends the second identifier to the unified data management function network element in the first area includes: sending the second identifier to the unified data management function network element in the first area via a network element selection function device in the first area; and the receiving, from the unified data management function network element in the first area, the subscription data of the terminal device corresponding to the second identifier includes: receiving, from the unified data management function network element in the first area via the network element selection function device in the first area, the subscription data of the terminal device corresponding to the second identifier.

In the foregoing solution, the network element selection function device in the roaming area establishes a connection to the network element selection function device in the home area based on the permanent identifier of the terminal device, and the network element selection function device in the home area obtains the subscription data of the terminal device from the unified data management function network element in the home area based on the permanent identifier of the terminal device. In this way, the network element selection function device in the roaming area can also obtain the subscription data of the terminal device from the unified data management function network element in the home area.

Optionally, before the second identifier is sent to the unified data management function network element in the first area via the network element selection function device in the first area, the network element selection function device in the second area determines an address of the network element selection function device in the first area based on the second identifier. Sending the second identifier to the unified data management function network element in the first area via the network element selection function device in the first area includes: The network element selection function device in the second area sends the second identifier to the network element selection function device in the first area based on the address of the network element selection function device in the first area; and the network element selection function device in the first area receives the second identifier, and sends the second identifier to the unified data management function network element in the first area.

In some possible implementations, when the first area is a home area of the terminal device, and the second area is a roaming area of the terminal device, the obtaining the address of the first core network element in the first area includes: receiving, via the access network device in the second area, first slice information of the first area and a first identifier of the terminal device that are sent by the terminal device; sending the first slice information of the first area and a second identifier of the terminal device to a network element selection function device in the first area, where the second identifier corresponds to the first identifier, the second identifier is a permanent identifier of the terminal device, and the first identifier is a temporary identifier of the terminal device; and receiving, from the network element selection function device in the first area, the address of the first core network element in the first area, where the address is determined by the network element selection function device in the first area based on the first slice information of the first area and the second identifier.

In the foregoing solution, the network element selection function device in the roaming area sends the first slice information of the home area and the permanent identifier of the terminal device to the network element selection function device in the home area. The network element selection function device in the home area determines the address of the first core network element in the home area based on the first slice information of the home area and the permanent identifier of the terminal device. The network element selection function device in the roaming area obtains the address of the first core network element in the home area from the network element selection function device in the home area. In other words, a need for the network element selection function device in the roaming area to determine the address of the first core network element in the home area is avoided. In this way, a function of the network element selection function device in the roaming area can be simplified.

Optionally, when the first core network element is a session management function network element, the terminal device may further send a data network name (data network name, DNN) and/or a PDU session identifier to the access network device in the second area when the terminal device simultaneously sends the first identifier and the first slice information of the first area to the access network device in the second area.

Optionally, when the first core network element is a session management function network element, and the terminal device sends a DNN to the access network device in the second area, the access network device in the second area may further send the DNN to the network element selection function device in the second area when the access network device in the second area sends the first identifier and the first slice information of the first area to the network element selection function device in the second area. Optionally, that the network element selection function device in the second area receives, from the network element selection function device in the first area, the address of the first core network element in the first area, where the address is determined by the network element selection function device in the first area based on the first slice information of the first area and the second identifier includes: The network element selection function device in the second area receives, from the network element selection function device in the first area, the address of the first core network element in the first area, where the address is determined by the network element selection function device in the first area based on the first slice information of the first area, the DNN, and the second identifier.

Optionally, when the first core network element is a session management function network element, and the terminal device sends a PDU session identifier to the access network device in the second area, the access network device in the second area may further send the PDU session identifier to the network element selection function device in the second area when the access network device in the second area sends the first identifier and the first slice information of the first area to the network element selection function device in the second area. Optionally, that the network element selection function device in the second area receives, from the network element selection function device in the first area, the address of the first core network element in the first area, where the address is determined by the network element selection function device in the first area based on the first slice information of the first area and the second identifier includes: The network element selection function device in the second area receives, from the network element selection function device in the first area, the address of the first core network element in the first area, where the address is determined by the network element selection function device in the first area based on the first slice information of the first area, the PDU session identifier, and the second identifier.

Optionally, when the first core network element is a session management function network element, and the terminal device sends a DNN and a PDU session identifier to the access network device in the second area, the access network device in the second area may further send the DNN and the PDU session identifier to the network element selection function device in the second area when the access network device in the second area sends the first identifier and the first slice information of the first area to the network element selection function device in the second area. Optionally, that the network element selection function device in the second area receives, from the network element selection function device in the first area, the address of the first core network element in the first area, where the address is determined by the network element selection function device in the first area based on the first slice information of the first area and the second identifier includes: The network element selection function device in the second area receives, from the network element selection function device in the first area, the address of the first core network element in the first area, where the address is determined by the network element selection function device in the first area based on the first slice information of the first area, the PDU session identifier, the DNN, and the second identifier.

Optionally, that the network element selection function device in the first area determines the address of the first core network element in the first area based on the first slice information of the first area and the second identifier includes: The network element selection function device in the first area obtains the subscription data of the terminal device from the unified data management function network element in the first area based on the second identifier, and determines the address of the first core network element in the first area based on the first slice information of the first area and the subscription data.

According to a second aspect, a communication method is provided, applied to a second core network element in a second area. The communication method includes: obtaining an address of a first core network element in a first area, where the first core network element in the first area includes a policy control function network element in the first area, and the second core network element in the second area includes a policy control function network element in the second area; or the first core network element in the first area includes a session management function network element in the first area, and the second core network element in the second area includes a session management function network element in the second area; and transmitting signaling of a terminal device based on the address of the first core network element, where the first area is a roaming area of the terminal device, and the second area is a home area of the terminal device; or the first area is a home area of the terminal device, and the second area is a roaming area of the terminal device.

In the foregoing solution, the second core network element in the second area obtains the address of the first core network element in the first area, and transmits the signaling of the terminal device based on the address of the first core network element. In other words, the second core network element in the second area sends the signaling of the terminal device to the first core network element in the first area based on the address of the first core network element in the first area. In this way, a connection between the core network element in the roaming area and the core network element in the home area can be established, so that a network operator in the home area can obtain communication data of the terminal device, thereby helping improve interests of the network operator.

In some possible implementations, when the first area is a home area of the terminal device, and the second area is a roaming area of the terminal device, that the second core network element in the second area obtains the address of the first core network element in the first area includes: receiving first information sent by a network element selection function in the second area via an access network device in the second area, where the first information indicates the address of the first core network element in the first area; and determining the address of the first core network element in the first area based on the first information.

In some possible implementations, when the first area is a home area of the terminal device, and the second area is a roaming area of the terminal device, that the second core network element in the second area obtains the address of the first core network element in the first area includes: receiving first information sent by an access network device in the second area, where the first information indicates the second core network element in the second area to obtain the address of the first core network element in the first area; and obtaining the address of the first core network element in the first area from a network element selection function device in the second area.

In some possible implementations, when the first area is a home area of the terminal device, and the second area is a roaming area of the terminal device, that the second core network element in the second area obtains the address of the first core network element in the first area includes: obtaining the address of the first core network element in the first area from a storage function network element in the second area.

Optionally, that the second core network element in the second area obtains the address of the first core network element in the first area from the storage function network element in the second area includes: The second core network element in the second area sends a first identifier of the terminal device to the storage function network element in the second area, and receiving, from the storage function network element in the second area, the address of the first core network element in the first area corresponding to the first identifier.

In some possible implementations, when the first area is a home area of the terminal device, and the second area is a roaming area of the terminal device, that the second core network element in the second area obtains the address of the first core network element in the first area includes: receiving, via an access network device in the second area, a first request message sent by the terminal device, where the first request message includes first slice information of the first area and a first identifier of the terminal device; obtaining subscription data of the terminal device from a unified data management function network element in the first area based on the first identifier of the terminal device; and determining the address of the first core network element in the first area based on the first slice information of the first area and the subscription data.

In the foregoing solution, the second core network element in the roaming area obtains the first identifier of the terminal device and the first slice information of the home area via the access network device in the roaming area. The second core network element in the roaming area obtains the subscription data of the terminal device based on the first identifier, and determines the address of the first core network element in the home area based on the obtained subscription data and the first slice information of the home area. In other words, the second core network element in the roaming area determines the address of the first core network element in the home area based on the obtained subscription data and the first slice information. In this way, the second core network element in the roaming area can determine the address of the first core network element in the home area, and establish a connection to the first core network element in the home area, so that a network operator in the home area can obtain communication data of the terminal device, thereby helping improve interests of the network operator.

Optionally, when the first core network element is a session management function network element, the first request message may further include at least one of a DNN, a PDU session identifier, or NSSAI. Optionally, the first request message may be a PDU session establishment request message. Optionally, when the first request message includes the NSSAI, the NSSAI may be the first slice information of the first area.

Optionally, when the first request message further includes the DNN, that the second core network element in the second area determines the address of the first core network element in the first area based on the first slice information of the first area and the subscription data may include: The second core network element in the second area determines the address of the first core network element in the first area based on the first slice information of the first area, the DNN, and the subscription data.

Optionally, when the first request message further includes the PDU session identifier, that the second core network element in the second area determines the address of the first core network element in the first area based on the first slice information of the first area and the subscription data may include: The second core network element in the second area determines the address of the first core network element in the first area based on the first slice information of the first area, the PDU session identifier, and the subscription data.

Optionally, when the first request message further includes the DNN and the PDU session identifier, that the second core network element in the second area determines the address of the first core network element in the first area based on the first slice information of the first area and the subscription data may include: The second core network element in the second area determines the address of the first core network element in the first area based on the first slice information of the first area, the DNN, the PDU session identifier, and the subscription data.

Optionally, when the first identifier of the terminal device is a permanent identifier of the terminal device, that the second core network element in the second area obtains the subscription data of the terminal device from the unified data management function network element in the first area based on the first identifier of the terminal device includes: The second core network element in the second area sends the first identifier to the unified data management function network element in the first area, and receives, from the unified data management function network element in the first area, the subscription data of the terminal device corresponding to the first identifier.

Optionally, when the first identifier of the terminal device is a temporary identifier of the terminal device, that the second core network element in the second area obtains the subscription data of the terminal device from the unified data management function network element in the first area based on the first identifier of the terminal device includes: The second core network element in the second area obtains from a storage function network element in the second area, a second identifier of the terminal device corresponding to the first identifier, where the storage function network element is configured to store a correspondence between the first identifier and the second identifier, and the second identifier is a permanent identifier of the terminal device; sends the second identifier to the unified data management function network element in the first area; and receives, from the unified data management function network element in the first area, the subscription data of the terminal device corresponding to the second identifier.

In some possible implementations, when the first area is a home area of the terminal device, and the second area is a roaming area of the terminal device, the obtaining the address of the first core network element in the first area includes: obtaining a second identifier from a storage function network element in the second area, where the second identifier is a permanent identifier of the terminal device; sending the second identifier to a unified data management function network element in the first area; receiving subscription data of the terminal device corresponding to the second identifier from the unified data management function network element in the first area; sending the subscription data to a network element selection function device in the second area; and receiving, from the network element selection function device in the second area, the address of the first core network element in the first area, where the address is determined by the network element selection function device in the second area based on the subscription data.

In the foregoing solution, the second core network element in the roaming area may obtain the permanent identifier of the terminal device from the storage function network element in the roaming area, obtain the subscription data of the terminal device from the unified data management function network element in the home area based on the permanent identifier of the terminal device, and send the subscription data to the network element selection function device in the roaming area. The network element selection function device in the roaming area receives the subscription data, determines the address of the first core network element in the home area based on the subscription data, and sends the determined address of the first core network element in the home area to the second core network element in the roaming area. In this way, the address of the first core network element in the home area cannot be obtained by the access network device in the roaming area, thereby improving security of the address of the first core network element in the home area.

According to a third aspect, this application provides a communication apparatus. The communication apparatus has a function of implementing behavior of each network element in each of the foregoing aspects and the possible implementations of the foregoing aspects. The function may be implemented by hardware, or may be implemented by executing corresponding software by hardware. The hardware or the software includes one or more modules or units corresponding to the foregoing function, for example, a processing module or unit, or a transceiver module or unit.

Optionally, the communication apparatus may be the network element selection function device in the second area in the first aspect or the second core network element in the second area in the second aspect.

According to a fourth aspect, this application provides a communication apparatus. The communication apparatus includes a processor, the processor is coupled to a memory, the memory is configured to store a computer program or instructions, and the processor is configured to execute the computer program or the instructions stored in the memory, to perform the method in the foregoing first aspect and the possible implementations of the foregoing first aspect.

According to a fifth aspect, this application provides a communication apparatus. The communication apparatus includes a processor, the processor is coupled to a memory, the memory is configured to store a computer program or instructions, and the processor is configured to execute the computer program or the instructions stored in the memory, to perform the method in the foregoing second aspect and the possible implementations of the foregoing second aspect.

According to a sixth aspect, this application provides a computer-readable storage medium, including computer instructions. When the computer instructions are run on a network element selection function device, the network element selection function device is caused to perform the method in any one of the first aspect or the possible implementations of the first aspect, or the communication method described in any one of embodiments of this application.

According to a seventh aspect, this application provides a computer-readable storage medium, including computer instructions. When the computer instructions are run on a second core network element, the second core network element is caused to perform the method in any one of the second aspect or the possible implementations of the second aspect, or the communication method described in any one of embodiments of this application.

It may be understood that, for beneficial effects of the second aspect to the seventh aspect, refer to related descriptions in the first aspect. Details are not described herein again.

### BRIEF DESCRIPTION OF DRAWINGS

FIG. 1 is a diagram of a system architecture according to an embodiment of this application;
FIG. 2 is a diagram of a roaming architecture according to an embodiment of this application;
FIG. 3 is a diagram of another roaming architecture according to an embodiment of this application;
FIG. 4 is a diagram of a communication method according to an embodiment of this application;
FIG. 5 is a schematic flowchart of a communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a schematic flowchart of another communication method according to an embodiment of this application;
FIG. 11 is a schematic flowchart of another communication method according to an embodiment of this application;
FIG. 12 is a schematic flowchart of another communication method according to an embodiment of this application;
FIG. 13 is a schematic flowchart of another communication method according to an embodiment of this application; and
FIG. 14 is a block diagram of a communication apparatus according to an embodiment of this application.

### DESCRIPTION OF EMBODIMENTS

The following describes the technical solutions in embodiments of this application with reference to the accompanying drawings in embodiments of this application. In descriptions of embodiments of this application, unless otherwise specified, "/" indicates "or". For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, in the descriptions of embodiments of this application, "a plurality of' means two or more.

The terms "first", "second", and "third" mentioned below are merely used for a purpose of description, and shall not be understood as an indication or an implication of relative importance or an implicit indication of a quantity of indicated technical features. In the descriptions of embodiments, unless otherwise specified, "a plurality of" means two or more.

The technical solutions in embodiments of this application may be applied to various communication system, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a future 5th generation (5th generation, 5G) system, or a new radio (new radio, NR) system.

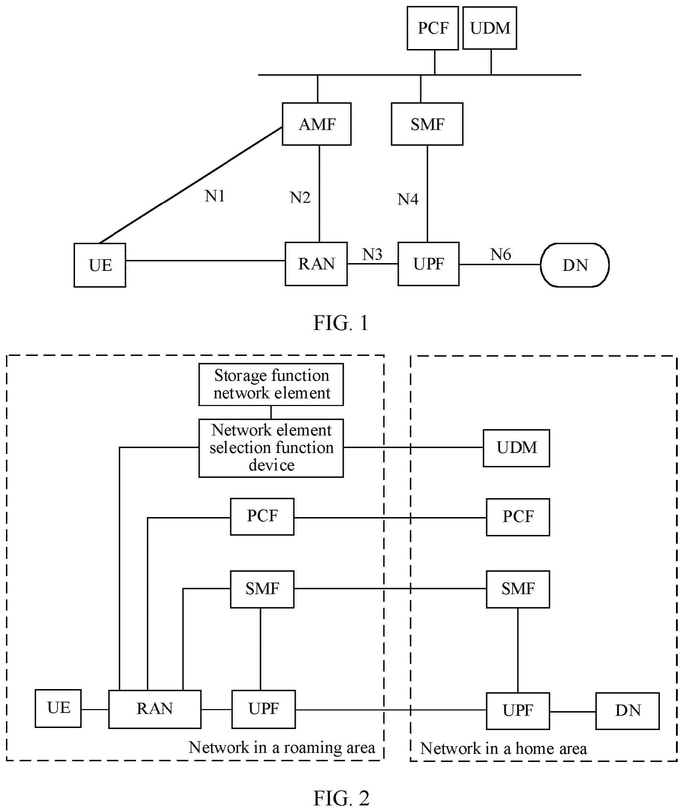

FIG. 1 is a diagram of a system architecture used in embodiments of this application. As shown in FIG. 1, the system includes at least one of a terminal device (user equipment, UE), a radio access network (radio access network, RAN), a user plane function network element (user plane function, UPF), a data network (data network, DN), a core network access and mobility management function network element (core access and mobility management function, AMF), a session management function network element (session management function, SMF), a policy control function network element (policy control function, PCF), and a unified data management function network element (unified data management, UDM).

The UE may also be referred to as a user device, a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

The UE may be a device that provides voice/data connectivity for users, for example, a handheld device or a vehicle-mounted device that has a wireless connection function. Currently, some examples of the terminal device are as follows: a mobile phone (mobile phone), a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a tablet computer, a computer having a wireless transceiver function, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. This is not limited in this application.

The RAN may be a device communicating with the UE, and the RAN may also be referred to as an access network device or a radio access network device. The RAN may be a transmission reception point (transmission reception point, TRP), or may be an evolved NodeB (evolved NodeB, eNB or eNodeB) in an LTE system, or may be a home base station (for example, a home evolved NodeB or a home NodeB, HNB), or may be a baseband unit (baseband unit, BBU), or may be a radio controller in a cloud radio access network (cloud radio access network, CRAN) scenario. Alternatively, the RAN may be a relay station, an access point, a vehicle-mounted device, a wearable device, a network device in a 5G network, a network device in a future evolved public land mobile network (public land mobile network, PLMN), or the like, or may be an access point (access point, AP) in a WLAN, or may be a gNB in an NR system. The RAN may be a metro base station, a micro base station, a pico base station, a femto base station, or the like. This is not limited in this application.

In a network structure, the RAN may include a central unit (central unit, CU) node, a distributed unit (distributed unit, DU) node, a radio access network (radio access network, RAN) device including the CU node and the DU node, or a device including a control plane CU node (CU-CP node), a user plane CU node (CU-UP node), and the DU node.

The RAN provides a service for a cell. The UE communicates with the cell by using a transmission resource (for example, a frequency domain resource or a spectrum resource) allocated by the RAN. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service.

The UPF is mainly responsible for service data processing, for example, forwarding, charging, lawful intercept, and the like.

The DN provides a data transmission service for UE, and may be a public data network (public data network, PDN), for example, the internet (internet) or the like.

The AMF is mainly used for UE attachment, mobility management, and a tracking area update procedure in a mobile network. The access and management network element terminates a non-access stratum (non-access stratum, NAS) message, completes registration management, connection management, reachability management, tracking area list (tracking area list, TA list) allocation, mobility management, and the like, and provides transparent routing for session management (session management, SM) messages to a session management network element.

The SMF is responsible for UPF selection or reselection and IP address allocation, and is responsible for session establishment, modification, and release, and quality of service (quality of service, QoS) controlling.

The PCF mainly supports a unified policy framework to govern network behavior, and provides policy rules for control layer network functions, and accesses user subscription information relevant for policy decisions. The PCF may be divided into two policy control function network elements with different functions. One is configured to generate UE policies, which are sent to the UE via an AMF, where the AMF does not parse content of the UE policies. The other is configured to generate access management policies, which are sent to the AMF.

The UDM is responsible for managing UE subscription data, and is configured for user identification handling (for example, storage and management of permanent identities of users), and the like. For example, the UDM may also be described as a storage function network element in this application.

As shown in FIG. 1, an interface between UE and an AMF is referred to as an N1 interface, an interface between a RAN and the AMF is referred to as an N2 interface, an interface between the RAN and a UPF is referred to as an N3 interface, an interface between the UPF and an SMF is referred to as an N4 interface, and an interface between the UPF and a DN is referred to as an N6 interface.

In some scenarios, a terminal device may move from a home area to a roaming area. If the terminal device establishes a signaling transmission channel with a network in the roaming area, a network in the home area cannot learn of a signaling transmission status of the terminal device. Consequently, a network operator in the home area cannot learn of communication data of the terminal device, and interests of the network operator in the home area are affected. Therefore, a connection between the roaming area and the home area needs to be established, allowing the network operator in the home area to obtain the communication data of the terminal device.

For the foregoing roaming scenario, FIG. 2 is a diagram of a roaming architecture applied to an embodiment of this application. As shown in FIG. 2, the roaming architecture includes a network in a roaming area and a network in a home area. The network in the roaming area includes UE, a RAN, an SMF, a PCF, a UPF, a network element selection function device, and a storage function network element in the roaming area. The network in the home area includes an SMF, a PCF, a UDM, a UPF, and a DN in the home area.

The following describes the devices and the network elements in FIG. 2. For descriptions of the UE, the RAN, the SMF, the PCF, and the UPF in the roaming area, and the SMF, the PCF, the UDM, the UPF, and the DN in the home area, refer to the descriptions in FIG. 1. In FIG. 2, functions of the SMFs (PCFs or UPFs) in the roaming area and the home area are the same. Descriptions about the network element selection function device and the storage function network element are provided herein.
(1) The network element selection function device is configured to select a core network element, where the selection may be based on a requirement of the UE. In other words, the network element selection function device may select the core network element based on the obtained requirements of the UE. For example, the requirement of the UE may be a requirement for establishing a PDU session, or may be a requirement for establishing a policy of the UE. Optionally, the network element selection function device may also be referred to as a network element selection function network element, a network element selection function entity, or the like.
(2) The storage function network element is configured to store UE information, for example, store UE identification information, which may be a UE temporary identifier or a UE permanent identifier, or may be a correspondence between a UE temporary identifier and a UE permanent identifier. Optionally, the storage function network element may also be referred to as a storage function entity or a storage device. It may be understood that the storage function network element may alternatively be replaced with another possible name. This is not limited in embodiments of this application. Optionally, functions of the storage function network element may be implemented by another network element, for example, implemented by the UDM.

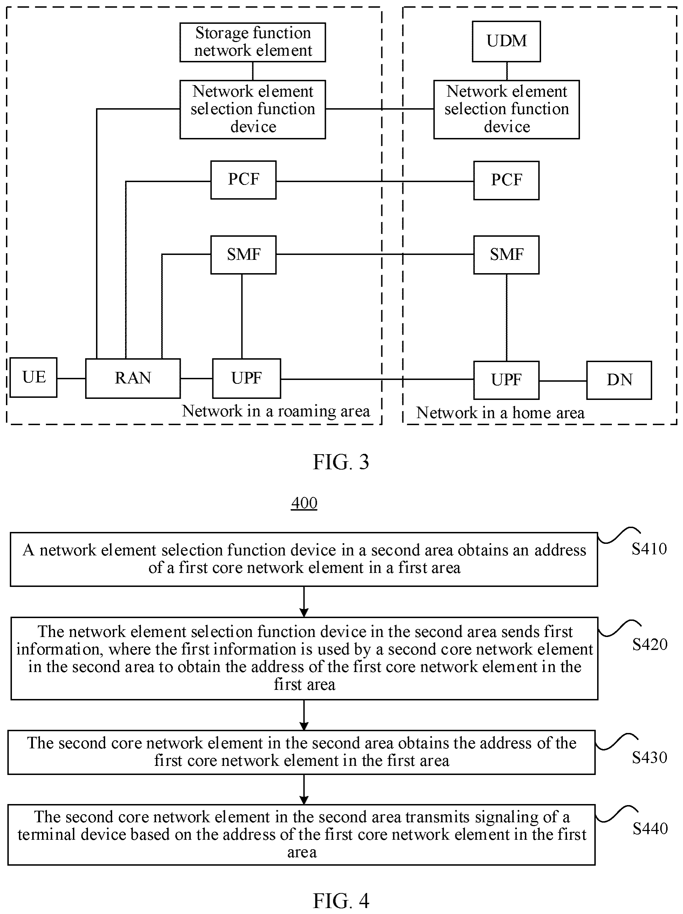

Based on the roaming architecture in FIG. 2, FIG. 3 is a diagram of another roaming architecture applied to an embodiment of this application. The roaming architecture shown in FIG. 3 includes a network in a roaming area and a network in a home area. The network in the roaming area in FIG. 3 includes UE, a RAN, an SMF, a PCF, a UPF, a network element selection function device, and a storage function network element in the roaming area. The network in the home area in FIG. 3 includes a network element selection function device in the home area, an SMF, a PCF, a UDM, a UPF, and a DN.

The following describes the devices and the network elements in FIG. 3. For descriptions of the UE, the RAN, the SMF, the PCF, and the UPF in the roaming area in FIG. 3, and the SMF, the PCF, the UDM, the UPF, and the DN in the home area in FIG. 3, refer to the descriptions in FIG. 1.

In FIG. 3, functions of the SMFs (PCFs or UPFs) in the roaming area and the home area are the same. Functions of the network element selection function devices in the roaming area and the home area in FIG. 3 are the same as those of the network element selection function device in the roaming area in FIG. 2, and functions of the storage function network element in the roaming area in FIG. 3 are also the same as those of the storage function network element in the roaming area in FIG. 2. To avoid repetition, details are not described herein.

In addition, in the roaming architectures shown in FIG. 2 and FIG. 3, the RAN in the roaming area has a plurality of connection interfaces, and may establish connections to a plurality of core network elements in the roaming area. In other words, different from the RAN in FIG. 1 that has connection interfaces only with the AMF and the UPF in FIG. 1, the RANs each in the roaming area in FIG. 2 and FIG. 3 may further have interfaces with other network elements in the core network in the roaming area. For example, the RAN in the roaming area in FIG. 2 has separate connection interfaces with the SMF in the roaming area, the PCF in the roaming area, and the network element selection function device in the roaming area in FIG. 2.

It should be noted that names of the network elements (such as the UE, RAN, UPF, DN, AMF, SMF, the PCF, and the UDM) included in FIG. 1 to FIG. 3 are merely names, and the names do not constitute a limitation on functions of the network elements. In a 5G network and another future network, the foregoing network elements may alternatively have other names. This is not specifically limited in embodiments of this application. For example, in a 6G network, some or all of the foregoing network elements may still use terms in 5G, or may have other names. A general description is provided herein, and details are not described again below.

It should be noted that the network elements in FIG. 1 to FIG. 3 do not necessarily exist simultaneously, which network elements are needed may be determined based on a requirement, and more or fewer network elements than those in FIG. 1 to FIG. 3 may be further included. A connection relationship between the network elements in FIG. 1 to FIG. 3 is not uniquely determined, and may be adjusted based on a requirement.

The network element in embodiments of this application may also be referred to as an entity or a function entity. For example, the AMF may also be referred to as an AMF entity or an AMF apparatus, and the SMF may also be referred to as an SMF entity or an SMF apparatus. The network element may be a network element in a hardware device, a software function running on dedicated hardware, or a virtualization function instantiated on a platform (for example, a cloud platform). Optionally, the foregoing network element may be implemented by one device, or may be jointly implemented by a plurality of devices, or may be a function module in one device. This is not specifically limited in embodiments of this application.

Based on the roaming architectures shown in FIG. 2 and FIG. 3, the following describes, with reference to FIG. 4, a process of establishing a connection between a core network element in a roaming area and a core network element in a home area according to an embodiment of this application.

As shown in FIG. 4, the communication method 400 may include the following steps.

S410: A network element selection function device in a second area obtains an address of a first core network element in a first area.

The first area is a roaming area of a terminal device, and the second area is a home area of the terminal device; or the first area is a home area of a terminal device, and the second area is a roaming area of the terminal device.

Optionally, the roaming area may be an area in which the terminal device in a roaming state is currently located. Optionally, the roaming area may be substituted with a roaming location, or may be substituted with a visited area or a visited location. For example, the roaming area in the communication method 400 may be the roaming area in FIG. 2 or FIG. 3.

Optionally, the home area may be a subscription location of the terminal device. Optionally, the home area may be substituted with a home location. For example, the home area in the communication method 400 may be the home area in FIG. 2 or FIG. 3.

Optionally, the first core network element in the first area may be an SMF in the first area, or may be a PCF in the first area, or may be an SMF and a PCF in the first area. The PCF in embodiments of this application is a network element configured to generate a policy of the terminal device. For example, the first core network element in the first area is the SMF and/or the PCF in the roaming area in FIG. 2 (or FIG. 3). For another example, the first core network element in the first area is the SMF and/or the PCF in the home area in FIG. 2 (or FIG. 3).

Optionally, the address of the first core network element in the first area may be an IP address of the first core network element in the first area. For example, the address of the first core network element in the first area is an IP address of the SMF and/or an IP address of the PCF in the roaming area in FIG. 2 (or FIG. 3). For another example, the address of the first core network element in the first area is an IP address of the SMF and/or an IP address of the PCF in the home area in FIG. 2 (or FIG. 3).

The following describes S410 in two cases.

Case 1: The first area is a home area of the terminal device, and the second area is a roaming area of the terminal device.

Before S410, the communication method 400 further includes: The network element selection function device in the second area obtains a first identifier of the terminal device and first slice information of the first area; and obtains subscription data of the terminal device from a UDM in the first area based on the first identifier of the terminal device. S410 includes: Determine the address of the first core network element in the first area based on the first slice information of the first area and the subscription data.

Optionally, the first identifier of the terminal device may be a permanent identifier of the terminal device, or may be a temporary identifier of the terminal device. Optionally, the permanent identifier of the terminal device may be an identifier that is allocated by a network operator in the home area to the terminal device and that identifies an identity of the terminal device. For example, in 5G, the permanent identifier of the terminal device may be a subscription permanent identifier (subscription permanent identifier, SUPI). Optionally, the temporary identifier of the terminal device may be an identifier that is allocated by a core network element in the roaming area accessed by the terminal device and that identifies an identity of the terminal device. For example, in 5G, the temporary identifier of the terminal device may be a globally unique temporary UE identity (globally unique temporary UE identity, GUTI).

It may be understood that, generally, the UDM identifies the permanent identifier of the terminal device, but cannot identify the temporary identifier of the terminal device. Therefore, when the first identifier of the terminal device is a permanent identifier, the network element selection function in the second area may directly obtain the subscription data of the terminal device from the UDM in the first area based on the first identifier. When the first identifier of the terminal device is a temporary identifier, that the network element selection function in the second area obtains the subscription data of the terminal device from the UDM in the first area based on the first identifier of the terminal device includes: The network element selection function in the second area obtains, from a storage function network element in the second area, a second identifier of the terminal device corresponding to the first identifier, where the storage function network element is configured to store a correspondence between the first identifier and the second identifier, and the second identifier is a permanent identifier of the terminal device; sends the second identifier to the UDM in the first area; and receives, from the UDM in the first area, the subscription data of the terminal device corresponding to the second identifier.

For example, the UDM in the first area may be the UDM in the home area in FIG. 2 or FIG. 3, and the network element selection function device in the second area may be the network element selection function device in the roaming area in FIG. 2 or FIG. 3. The network element selection function device in the roaming area in FIG. 2 or FIG. 3 may obtain an address of the UDM in the home area based on a permanent identifier of the terminal device, establish a connection to the UDM in the home area, and send the permanent identifier of the terminal device to the UDM in the home area. The UDM in the home area determines, based on the received permanent identifier of the terminal device, subscription data corresponding to the permanent identifier of the terminal device, and sends the subscription data to the network element selection function device in the roaming area in FIG. 2 or FIG. 3.

Optionally, when the first identifier of the terminal device is a temporary identifier, that the network element selection function device in the second area sends the second identifier corresponding to the first identifier to the UDM in the first area, where the second identifier is a permanent identifier of the terminal device includes: sending the second identifier to the UDM in the first area via a network element selection function device in the first area. Receiving, from the UDM in the first area, the subscription data of the terminal device corresponding to the second identifier includes: receiving, from the UDM in the first area via the network element selection function device in the first area, the subscription data of the terminal device corresponding to the second identifier.

Optionally, before the second identifier is sent to the UDM in the first area via the network element selection function device in the first area, the network element selection function device in the second area determines an address of the network element selection function device in the first area based on the second identifier. Sending the second identifier to the UDM in the first area via the network element selection function device in the first area includes: The network element selection function device in the second area sends the second identifier to the network element selection function device in the first area based on the address of the network element selection function device in the first area; and the network element selection function device in the first area receives the second identifier, and sends the second identifier to the UDM in the first area.

For example, the network element selection function device in the first area is the network element selection function device in the home area in FIG. 3, the network element selection function device in the second area is the network element selection function device in the roaming area in FIG. 3, and the UDM in the first area is the UDM in the home area in FIG. 3. The network element selection function device in the roaming area in FIG. 3 may determine an address of the network element selection function device in the home area based on the permanent identifier of the terminal device, establish a connection to the network element selection function device in the home area, and send the permanent identifier to the network element selection function device in the home area. The network element selection function device in the home area sends the permanent identifier to the UDM in the home area. The UDM in the home area determines, based on the received permanent identifier, subscription data corresponding to the permanent identifier, and sends the subscription data to the network element selection function device in the roaming area via the network element selection function device in the home area in FIG. 3.

The foregoing is a process in which the network element selection function device in the second area obtains the subscription data of the terminal device. For Case 1, the following describes in detail two manners in which the network element selection function device in the second area obtains the address of the first core network element in the first area.

Manner 1: The network element selection function device in the second area determines the address of the first core network element in the first area based on the obtained subscription data and the first slice information of the first area. Manner 1 may be applied to the roaming architecture in FIG. 2 or FIG. 3.

Optionally, the first slice information of the first area may indicate NSSAI corresponding to the first area.

Optionally, when the first core network element in the first area is an SMF in the first area, the NSSAI corresponding to the first area may be obtained by mapping NSSAI requested by the terminal device in the second area, or may be obtained by mapping NSSAI allowable in the second area. Optionally, the NSSAI requested by the terminal device in the second area may belong to the NSSAI allowable in the second area. Optionally, the NSSAI allowable in the second area may be a set of slices available to the terminal device in the second area, and the NSSAI allowable in the second area may be determined by the AMF in the second area for the terminal device in a network registration and access process of the terminal device. Optionally, the network slice selection assistance information may alternatively be S-NSSAI.

Optionally, when the first core network element in the first area is a PCF in the first area, the NSSAI corresponding to the first area may be obtained by mapping the NSSAI allowable in the second area.

It may be understood that the subscription data of the terminal device may generally include slice selection subscription data, SMF selection subscription data, access and mobility management subscription data, or the like. The slice selection subscription data may include S-NSSAI subscribed by the terminal device. The subscribed S-NSSAI may be used to perform matching verification with NSSAI requested by the terminal device, or may be used to perform matching verification with allowable NSSAI, to verify validity of the NSSAI requested by the terminal device or the allowable NSSAI. Because there is a correspondence between NSSAI and a core network element, the network element selection function device in the second area may determine the address of the first core network element from a plurality of core network elements in the first area based on the first slice information of the first area and the subscription data. The plurality of core network elements herein have a same function. For example, the plurality of core network elements are all PCFs and have a function of generating a policy of the terminal device. For another example, the plurality of core network elements are all SMFs and have a session management function.

The network element selection function device in the second area may determine the address of the first core network element from the plurality of core network elements in the first area based on a plurality of factors. This is not limited in embodiments of this application.

Optionally, when the first core network element is an SMF, the network element selection function device in the second area may determine the address of the first core network element from the plurality of core network elements in the first area based on the subscription data of the terminal device, or may determine the address of the first core network element from the plurality of core network elements in the first area based on the subscription data of the terminal device and at least one of a DNN, a PDU session identifier, or the first slice information of the first area.

For example, the first core network element is the SMF in the home area in FIG. 2 or FIG. 3, and the UE sends a PDU session establishment request message to the network element selection function device in the roaming area via the RAN in the roaming area. The PDU session establishment request message includes: a DNN, a PDU session identifier, first slice information of the home area, and a first identifier of the UE. The network element selection function device in the roaming area obtains subscription data of the UE based on the first identifier of the UE, and determines an address of the SMF in the home area in FIG. 2 or FIG. 3 from a plurality of SMFs in the home area based on the obtained subscription data of the UE, the DNN, the PDU session identifier, and the first slice information of the home area.

Optionally, when the first core network element is a PCF, the network element selection function device in the second area may determine the address of the first core network element from the plurality of core network elements in the first area based on the subscription data of the terminal device.

For example, the first core network element is the PCF in the home area in FIG. 2 or FIG. 3, and the UE sends a policy establishment request message of the UE to the network element selection function device in the roaming area via the RAN in the roaming area. The policy establishment request message of the UE includes a first identifier of the UE. The network element selection function device in the roaming area obtains subscription data of the UE based on the first identifier of the UE, and determines an address of the PCF in the home area in FIG. 2 or FIG. 3 from a plurality of PCFs in the home area based on the obtained subscription data of the UE.

Manner 2: The network element selection function device in the second area obtains, from the network element selection function device in the first area, the address of the first core network element in the first area, where the address is determined by the network element selection function device in the first area. Manner 2 may be a manner of obtaining the address of the first core network element in the first area provided for the roaming architecture in FIG. 3.

Optionally, when the first identifier of the terminal device is a permanent identifier, the network element selection function device in the second area receives, via an access network device in the second area, the first slice information of the first area and the first identifier of the terminal device that are sent by the terminal device; the network element selection function device in the second area sends the first slice information of the first area and the first identifier of the terminal device to the network element selection function device in the first area; and the network element selection function device in the second area receives, from the network element selection function device in the first area, the address of the first core network element in the first area, where the address is determined by the network element selection function device in the first area based on the first slice information of the first area and the first identifier.

Optionally, when the first identifier of the terminal device is a temporary identifier, the network element selection function device in the second area receives, via an access network device in the second area, the first slice information of the first area and the first identifier of the terminal device that are sent by the terminal device; the access network device in the second area sends the first slice information of the first area and the second identifier of the terminal device to the network element selection function device in the first area, where the second identifier corresponds to the first identifier, the second identifier is a permanent identifier of the terminal device, and the first identifier is a temporary identifier of the terminal device; and the access network device in the second area receives, from the network element selection function device in the first area, the address of the first core network element in the first area, where the address is determined by the network element selection function device in the first area based on the first slice information of the first area and the second identifier.

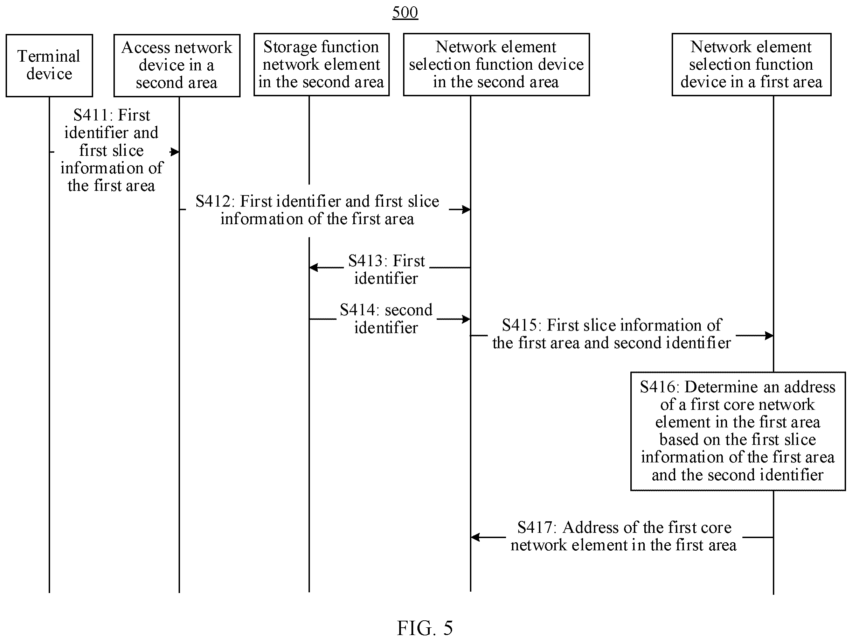

To better understand Manner 2, the following provides descriptions with reference to FIG. 5. As shown in FIG. 5, the method 500 includes the following steps.

S411: A terminal device sends a first identifier and first slice information of a first area to an access network device in a second area, and the access network device in the second area receives the first identifier and the first slice information of the first area from the terminal device.

The terminal device is located in the second area. The first slice information of the first area is the same as that in Manner 1. To avoid repetition, details are not described herein.

Optionally, when a first core network element is an SMF, the terminal device may further send a DNN and/or a PDU session identifier to the access network device in the second area when the terminal device sends the first identifier and the first slice information of the first area to the access network device in the second area.

S412: The access network device in the second area sends the first identifier and the first slice information of the first area to a network element selection function device in the second area, and the network element selection function device in the second area receives the first identifier and the first slice information of the first area from the access network device in the second area.

Optionally, when a first core network element is an SMF, and the terminal device sends a DNN to the access network device in the second area in S411, the access network device in the second area may further send the DNN to the network element selection function device in the second area when sending the first identifier and the first slice information of the first area to the network element selection function device in the second area.

Optionally, when a first core network element is an SMF, and the terminal device sends a PDU session identifier to the access network device in the second area in S411, the access network device in the second area may further send the PDU session identifier to the network element selection function device in the second area when sending the first identifier and the first slice information of the first area to the network element selection function device in the second area.

Optionally, when a first core network element is an SMF, and the terminal device sends a DNN and a PDU session identifier to the access network device in the second area in S411, the access network device in the second area may further send the DNN and the PDU session identifier to the network element selection function device in the second area when sending the first identifier and the first slice information of the first area to the network element selection function device in the second area.

S413: The network element selection function device in the second area sends the first identifier to a storage function network element in the second area, and the storage function network element in the second area receives the first identifier from the network element selection function device in the second area.

The storage function network element in the second area is configured to store a correspondence between the first identifier and a second identifier. In other words, the storage function network element in the second area may determine the second identifier of the terminal device based on the received first identifier.

S414: The storage function network element in the second area sends the second identifier to the network element selection function device in the second area, and the network element selection function device in the second area receives the second identifier from the storage function network element in the second area.

It should be noted that S413 and S414 are optional steps. For example, that the first identifier in S412 is a permanent identifier indicates that the first identifier in S412 is the second identifier. In this case, there is no need to perform S413 and S414.

S415: The network element selection function device in the second area sends the first slice information of the first area and the second identifier to a network element selection function device in the first area, and the network element selection function device in the first area receives the first slice information of the first area and the second identifier from the network element selection function device in the second area.

Optionally, when a first core network element is an SMF, and the access network device in the second area sends a DNN to the network element selection function device in the second area in S412, the network element selection function device in the second area may further send the DNN to the network element selection function device in the first area when the network element selection function device in the second area sends the first slice information of the first area and the second identifier to the network element selection function device in the first area.

Optionally, when a first core network element is an SMF, and the access network device in the second area sends a PDU session identifier to the network element selection function device in the second area in S412, the network element selection function device in the second area may further send the PDU session identifier to the network element selection function device in the first area when the network element selection function device in the second area sends the first slice information of the first area and the second identifier to the network element selection function device in the first area.

Optionally, when a first core network element is an SMF, and the access network device in the second area sends a DNN and a PDU session identifier to the network element selection function device in the second area in S412, the network element selection function device in the second area may further send the DNN and the PDU session identifier to the network element selection function device in the first area when the network element selection function device in the second area sends the first slice information of the first area and the second identifier to the network element selection function device in the first area.

S416: The network element selection function device in the first area determines an address of the first core network element in the first area based on the first slice information and the second identifier.

Optionally, when the first core network element is an SMF, and the network element selection function device in the second area sends the first slice information of the first area, the second identifier, and a DNN to the network element selection function device in the first area, the network element selection function device in the first area may determine an address of the first core network element in the first area based on the first slice information of the first area, the second identifier, and the DNN.

Optionally, when the first core network element is an SMF, and the network element selection function device in the second area sends the first slice information of the first area, the second identifier, and a PDU session identifier to the network element selection function device in the first area, the network element selection function device in the first area may determine an address of the first core network element in the first area based on the first slice information of the first area, the second identifier, and the PDU session identifier.

Optionally, when the first core network element is an SMF, and the network element selection function device in the second area sends the first slice information of the first area, the second identifier, a DNN, and a PDU session identifier to the network element selection function device in the first area, the network element selection function device in the first area may determine an address of the first core network element in the first area based on the first slice information of the first area, the DNN, the second identifier, and the PDU session identifier.

Optionally, S416 includes: The network element selection function device in the first area obtains subscription data of the terminal device from a UDM in the first area based on the second identifier, and determines the address of the first core network element in the first area based on the first slice information of the first area and the subscription data. For a process in which the network element selection function device in the first area determines the address of the first core network element in the first area based on the first slice information of the first area and the subscription data of the terminal device, refer to the descriptions in Manner 1.

For example, the network element selection function device in the first area is the network element selection function device in the home area in FIG. 3. The network element selection function device in the home area obtains subscription data of the UE from the UDM in the home area based on a permanent identifier of the UE, and obtains an address of the SMF in the home area in FIG. 3 from a plurality of SMFs in the home area based on the obtained subscription data of the UE and first slice information of the home area.

S417: The network element selection function device in the first area sends the address of the first core network element in the first area to the network element selection function device in the second area, and the network element selection function device in the second area receives the address of the first core network element in the first area from the network element selection function device in the first area.

It may be understood that, in Manner 2, it is the network element selection function device in the first area that determines the address of the first core network element in the first area, and sends the determined address of the first core network element to the network element selection function device in the second area, but in Manner 1, it is the network element selection function device in the second area that determines the address of the first core network element in the first area based on the obtained subscription data of the terminal device and the first slice information. In this case, in comparison with Manner 1, Manner 2 does not require the network element selection function device in the second area to determine the address of the first core network element in the first area. In this way, a function of the network element selection function device in the second area can be simplified.

Case 2: The first area is a roaming area of the terminal device, and the second area is a home area of the terminal device.

For Case 2, the following describes two manners in which the network element selection function device in the second area obtains the address of the first core network element in the first area. Case 2 is applied to the roaming architecture shown in FIG. 3.

Manner 1: The network element selection function device in the second area obtains third slice information of the first area and a permanent identifier of the terminal device via a network element selection function device in the first area; obtains subscription data of the terminal device from a UDM in the second area based on the permanent identifier of the terminal device; and determines the address of the first core network element in the first area based on the third slice information of the first area and the subscription data.

Optionally, the third slice information of the first area may indicate NSSAI corresponding to the first area.

Optionally, when the first core network element is an SMF, the NSSAI corresponding to the first area may be NSSAI requested by the terminal device in the first area, or may NSSAI allowable in the first area.

For example, the first core network element is the SMF in the roaming area in FIG. 3, and the network element selection function device in the second area is the network element selection function device in the home area in FIG. 3. The network element selection function device in the home area interacts with the network element selection function device in the roaming area, to obtain NSSAI requested by the UE in the roaming area (or NSSAI allowable in the roaming area) and a permanent identifier of the UE. The network element selection function device in the home area obtains subscription data of the UE from the UDM in the home area based on the permanent identifier of the UE, and the network element selection function device in the home area determines an address of the SMF in the roaming area in FIG. 3 from a plurality of SMFs in the roaming area based on the subscription data of the UE and the NSSAI requested by the UE in the roaming area (or the NSSAI allowable in the roaming area).

Optionally, when the first core network element is a PCF, the NSSAI corresponding to the first area may be NSSAI allowable in the first area.

For example, the first core network element is the PCF in the roaming area in FIG. 3, and the network element selection function device in the second area is the network element selection function device in the home area in FIG. 3. The network element selection function device in the home area interacts with the network element selection function device in the roaming area to obtain NSSAI allowable in the roaming area and a permanent identifier of the UE. The network element selection function device in the home area obtains subscription data of the UE from the UDM in the home area based on the permanent identifier of the UE, and the network element selection function device in the home area determines an address of the PCF in the roaming area in FIG. 3 from a plurality of PCFs in the roaming area based on the subscription data of the UE and the NSSAI allowable in the roaming area.

For a process in which the network element selection function device in the second area determines the address of the first core network element in the first area based on the third slice information of the first area and the subscription data, refer to the descriptions of the corresponding part in Manner 1 in Case 1. To avoid repetition, details are not described herein again.

Manner 2: The network element selection function device in the second area receives, from a network element selection function device in the first area, the address of the first core network element in the first area, where the address is determined by the network element selection function device in the first area based on third slice information of the first area and a first identifier of the terminal device.

Optionally, that the network element selection function device in the first area determines the address of the first core network element in the first area based on the third slice information of the first area and the first identifier of the terminal device may include: The network element selection function device in the first area receives, via an access network device in the first area, the third slice information of the first area and the first identifier of the terminal device that are sent by the terminal device; the network element selection function device in the first area obtains subscription data of the terminal device from a UDM in the second area based on the first identifier of the terminal device; and the network element selection function device in the first area determines the address of the first core network element in the first area based on the third slice information of the first area and the subscription data.

For example, the network element selection function device in the first area is the network element selection function device in the roaming area in FIG. 3. The network element selection function device in the roaming area obtains subscription data of the UE from the UDM in the home area based on a first identifier of the UE, and determines an address of the SMF in the roaming area from a plurality of SMFs in the roaming area based on the obtained subscription data of the UE and third slice information of the roaming area. In FIG. 3, the network element selection function device in the home area interacts with the network element selection function device in the roaming area, to obtain an address of the SMF in the roaming area from the network element selection function device in the roaming area.

In S410, Manner 1 in Case 2 corresponds to Manner 1 in Case 1. In both manners, the network element selection function device in the second area determines the address of the first core network element in the first area based on the first slice information (or the third slice information) of the first area and the subscription data. In S410, Manner 2 in Case 2 corresponds to Manner 2 in Case 1. In both manners, the network element selection function device in the second area interacts with the network element selection function device in the first area, and obtains, from the network element selection function device in the first area, the address of the first core network element in the first area, where the address is determined by the network element selection function device in the first area based on the first slice information (or the third slice information) of the first area and the subscription data.

S420: The network element selection function device in the second area sends first information, where the first information is used by a second core network element in the second area to obtain the address of the first core network element in the first area.

Optionally, the second core network element in the second area may be an SMF in the second area or a PCF in the second area. Optionally, a function of the second core network element in the second area is the same as a function of the first core network element in the first area. For example, the first core network element in the first area includes a PCF in the first area, and the second core network element in the second area includes a PCF in the second area; or the first core network element in the first area includes an SMF in the first area, and the second core network element in the second area includes an SMF. Alternatively, the first core network element in the first area includes a PCF in the first area and an SMF in the first area, and the second core network element in the second area includes a PCF in the second area and an SMF in the second area.

For example, the second core network element in the second area is the SMF in the roaming area in FIG. 2 (or FIG. 3), and the first core network element in the first area is the SMF in the home area in FIG. 2 (or FIG. 3). For another example, the second core network element in the second area is the PCF in the roaming area in FIG. 2 (or FIG. 3), and the first core network element in the first area is the PCF in the home area in FIG. 2 (or FIG. 3). For still another example, the second core network element in the second area is the SMF and the PCF in the roaming area in FIG. 2 (or FIG. 3), and the first core network element in the first area is the SMF and the PCF in the home area in FIG. 2 (or FIG. 3).

The following describes S420 in two cases.

Case 1: The first area is a home area of the terminal device, and the second area is a roaming area of the terminal device.

Case 1 of S420 corresponds to Case 1 of S410.

For Case 1, the network element selection function device in the second area may send the first information in the following three manners.

Manner 1: The network element selection function device in the second area sends the first information to the second core network element in the second area via the access network device in the second area, where the first information indicates the address of the first core network element in the first area.

Optionally, that the network element selection function device in the second area sends the first information to the second core network element in the second area via the access network device in the second area includes: The network element selection function device in the second area sends a container to the second core network element in the second area via the access network device in the second area, where the container includes the first information. In other words, the access network device in the second area does not parse the first information in the container.

For example, the network element selection function device in the second area is the network element selection function device in the roaming area in FIG. 2 or FIG. 3, the access network device in the second area is the RAN in the roaming area in FIG. 2 or FIG. 3, and the second core network element in the second area is the SMF in the roaming area in FIG. 2 or FIG. 3. The network element selection function device in the roaming area in FIG. 2 or FIG. 3 sends a container to the RAN in the roaming area, where the container includes information indicating the address of the SMF in the home area. The RAN in the roaming area receives the container, and sends the container to the SMF in the roaming area.

Optionally, that the access network device in the second area sends the first information to the second core network element in the second area includes: The access network device in the second area obtains an address of the second core network element in the second area from the network element selection function device in the second area; and sends the first information to the second core network element in the second area based on the address of the second core network element in the second area.

In addition, the access network device in the second area does not parse the first information in Manner 1 in Case 1 of S420. In other words, the access network device in the second area forwards the first information to the second core network element in the second area, and the second core network element in the second area parses the first information and obtains the address of the first core network element in the first area. It may be understood that, that the second core network element in the second area is capable of parsing the first information may be a function of the second core network element.

The foregoing is Manner 1 in which the network element selection function device in the roaming area sends the first information to the second core network element in the roaming area via the access network device in the roaming area. This indicates that the access network device in the roaming area only forwards the first information to the second core network element in the roaming area, but the access network device in the roaming area does not parse the first information and the second core network element in the roaming area parses the first information and obtains the address of the first core network element in the home area. In this way, the address of the first core network element in the home area cannot be obtained by the access network device in the roaming area, thereby improving security of the address of the first core network element in the home area.

Manner 2: The network element selection function device in the second area sends the first information to the second core network element in the second area via the access network device in the second area, where the first information indicates the second core network element in the second area to obtain the address of the first core network element in the first area.

Optionally, that the first information indicates the second core network element in the second area to obtain the address of the first core network element in the first area may be understood as follows: The first information does not include the address of the first core network element in the first area, and does not indicate the address of the first core network element in the first area but may indicate the core network element in the second area to obtain the address of the first core network element in the first area, and the second core network element may obtain the address of the first core network element in the first area based on the first information.

Optionally, the first information is information indicating that the address of the first core network element in the first area needs to be obtained. In other words, the network element selection function device in the second area sends, to the second core network element in the second area via the access network device in the second area, the information indicating that the address of the first core network element in the first area needs to be obtained, to indicate the second core network element in the second area to obtain the address of the first core network element in the first area.

Optionally, the first information is roaming information of the terminal device. In other words, the network element selection function device in the second area sends the roaming information of the terminal device to the second core network element in the second area via the access network device in the second area, implicitly indicating the second core network element in the second area to obtain the address of the first core network element in the first area.

Optionally, when the first information is roaming information of the terminal device, the roaming information of the terminal device may indicate that the terminal device is in a roaming state.

For example, the network element selection function device in the second area is the network element selection function device in the roaming area in FIG. 2 or FIG. 3, and the second core network element in the second area is the PCF in the roaming area in FIG. 2 or FIG. 3. The network element selection function device in the roaming area sends first information to the RAN in the roaming area in FIG. 2 or FIG. 3, where the first information is roaming information indicating that the UE is in a roaming state. The RAN in the roaming area sends the first information to the PCF in the roaming area. After receiving the first information, the PCF in the roaming area may obtain the address of the PCF in the home area.

Optionally, when the first information is roaming information of the terminal device, the roaming information of the terminal device may indicate that a roaming type of the terminal device is HR roaming, or indicate that a roaming type of the terminal device does not support LBO roaming.

Optionally, the roaming type of the terminal device may include HR roaming and LBO roaming. Optionally, LBO roaming may mean that a terminal device accesses a DN via a UPF in a roaming area. Optionally, HR roaming may mean that a terminal device accesses a DN via a UPF in a home area. Further, the roaming type of the terminal device may be determined based on the subscription data of the terminal device and at least one of the NSSAI requested by the terminal device and the DNN. For example, when the terminal device accesses a DNN 1, it is determined, based on the subscription data of the terminal device and the DNN 1, that the roaming type of the terminal device is HR roaming. For another example, when the terminal device accesses a DNN 2 and NSSAI 1, it is determined, based on the subscription data of the terminal device, the DNN 2, and the NSSAI 1, that the roaming type of the terminal device is LBO roaming.

For example, the network element selection function device in the second area is the network element selection function device in the roaming area in FIG. 2 or FIG. 3, and the second core network element in the second area is the SMF in the roaming area in FIG. 2 or FIG. 3. The network element selection function device in the roaming area sends first information to the RAN in the roaming area in FIG. 2 or FIG. 3, where the first information is roaming information indicating that a roaming type of the UE is HR roaming. The RAN in the roaming area sends the first information to the SMF in the roaming area. After receiving the first information, the SMF in the roaming area may obtain the address of the SMF in the home area.

The foregoing is a process in which the network element selection function device in the roaming area sends the first information to the second core network element in the roaming area via the access network device in the roaming area in Manner 2. A difference from Manner 1 is as follows: The first information in Manner 2 indicates the second core network element in the roaming area to obtain the address of the first core network element in the home area, but the first information does not include the address of the first core network element in the home area. Therefore, the access network device in the roaming area cannot obtain the address of the first core network element in the home area based on the received first information, so that security of the address of the first core network element in the home area can be improved. In addition, encapsulation processing in a container form does not need to be performed on the address of the first core network element in the first area, where the address is determined by the network element selection function device in the roaming area. In this way, the address of the first core network element in the home area cannot be obtained by the access network device in the roaming area, and a function of the network element selection function device in the roaming area can be further simplified.

Manner 3: The network element selection function device in the second area sends the first information to the storage function network element in the second area, where the first information includes the address of the first core network element in the first area, and the second core network element in the second area is configured to obtain the address of the first core network element in the first area from the storage function network element in the second area.

Optionally, the first information may further include the first identifier of the terminal device.

Optionally, after the network element selection function device in the second area sends the first information to the storage function network element in the second area, the communication method further includes: The storage function network element in the second area receives the first information.

Optionally, after the storage function network element in the second area receives the first information, the communication method further includes: The storage function network element in the second area stores the first information.

Optionally, when the first information further includes the first identifier of the terminal device, that the storage function network element in the second area stores the first information includes: The storage function network element in the second area stores the address of the first core network element in the first area, the first identifier, and a correspondence between the first identifier and the address of the first core network element in the first area.

For example, the network element selection function device in the second area is the network element selection function device in the roaming area in FIG. 2 or FIG. 3, the second core network element in the second area is the SMF in the roaming area in FIG. 2 or FIG. 3, and the storage function network element in the second area is the storage function network element in the roaming area in FIG. 2 or FIG. 3. The network element selection function device in the roaming area sends first information to the storage function network element in the roaming area, where the first information includes: the first identifier of the UE and the address of the SMF in the home area. The storage function network element in the roaming area stores the first information, and the SMF in the roaming area may obtain the address of the SMF in the home area from the storage function network element in the roaming area.

The foregoing is Manner 3 in which the network element selection function device in the roaming area sends the first information to the storage function network element in the roaming area, where the first information is information including the address of the first core network element in the home area. A difference from Manner 1 is as follows: The first information in Manner 3 includes the address of the first core network element in the home area, and the second core network element in the roaming area interacts with the storage function network element in the roaming area, to obtain the address of the first core network element in the first area from the storage function network element in the roaming area. In this way, the address of the first core network element in the home area cannot be obtained by the access network device in the roaming area, thereby improving security of the address of the first core network element in the home area. In addition, encapsulation processing in a container form does not need to be performed on the address that is of the first core network element in the home area and that is determined by the network element selection function device in the roaming area, so that a function of the network element selection function device in the roaming area can be simplified.

Case 2: The first area is a roaming area of the terminal device, and the second area is a home area of the terminal device.

Case 2 of S420 corresponds to Case 2 of S410. Case 2 is applied to the roaming architecture shown in FIG. 3.

Optionally, the network element selection function device in the second area sends the first information to the second core network element in the second area, where the first information includes the address of the first core network element in the first area.

Optionally, before the network element selection function device in the second area sends the first information to the second core network element in the second area, the network element selection function device in the second area obtains the address of the first core network element in the first area. For obtaining the address of the first core network element in the first area by the network element selection function device in the second area, refer to the descriptions of Case 2 of S410. To avoid repetition, details are not described herein.

For example, the network element selection function device in the second area is the network element selection function device in the home area in FIG. 3, the second core network element in the second area is the SMF in the home area in FIG. 3, and the first core network element in the first area is the SMF in the roaming area in FIG. 3. The network element selection function device in the home area sends the address of the SMF in the roaming area to the SMF in the home area, and the SMF in the home area sends signaling of the terminal device to the SMF in the roaming area based on the address of the SMF in the roaming area.

In the foregoing two cases, the network element selection function device in the second area sends the first information. The first information is used by the second core network element in the second area to obtain the address of the first core network element in the first area. The second core network element in the second area may send signaling of the terminal device to the first core network element in the first area based on the address of the first core network element in the first area. In this way, a connection between a core network element in the roaming area and a core network element in the home area can be established, so that a network operator in the home area can obtain communication data of the terminal device, thereby helping improve interests of the network operator.

S430: The second core network element in the second area obtains the address of the first core network element in the first area.

The following describes S430 in two cases.

Case 1: The first area is a home area of the terminal device, and the second area is a roaming area of the terminal device.

Case 1 of S430 corresponds to Case 1 of S420 and S410.

In Case 1, the second core network element in the second area may obtain the address of the first core network element in the first area in the following five manners.

Manner 1: The second core network element in the second area receives the first information sent by the network element selection function in the second area via the access network device in the second area, where the first information indicates the address of the first core network element in the first area; and determines the address of the first core network element in the first area based on the first information.

Manner 1 herein corresponds to Manner 1 in Case 1 of S420, that is, the first information herein is the first information in Manner 1 in Case 1 of S420. For a process in which the second core network element in the second area receives the first information sent by the network element selection function in the second area via the access network device in the second area, refer to the descriptions in Manner 1 in Case 1 of S420. To avoid repetition, details are not described herein.

Optionally, that the second core network element in the second area determines the address of the first core network element in the first area based on the first information includes: The second core network element in the second area parses the first information to obtain the address of the first core network element in the first area.

Manner 2: The second core network element in the second area receives the first information sent by the access network device in the second area, where the first information indicates the second core network element in the second area to obtain the address of the first core network element in the first area; and obtains the address of the first core network element in the first area from the network element selection function device in the second area.

Manner 2 herein corresponds to Manner 2 in Case 1 of S420, that is, the first information herein is the first information in Manner 2 in Case 1 of S420.

Optionally, that the second core network element in the second area obtains the address of the first core network element in the first area from the network element selection function device in the second area includes: The second core network element in the second area sends a second request message to the network element selection function device in the second area, where the second request message includes the first identifier of the terminal device, and the second request message is used to request to obtain the address of the first core network element in the first area; and receives a response message from the network element selection function device in the second area for the second request message, where the response message for the second request message includes the address that is of the first core network element in the first area and that corresponds to the first identifier of the terminal device.

For example, the second core network element in the second area is the SMF in the roaming area in FIG. 2 or FIG. 3. After receiving the first information sent by the RAN in the roaming area, the SMF in the roaming area sends a second request message to the network element selection function device in the roaming area, where the second request message includes a permanent identifier or a temporary identifier of the UE. The SMF in the roaming area receives a response message from the network element selection function device in the roaming area for the second request message, where the response message for the second request message includes the address that is of the SMF in the home area and that corresponds to the permanent identifier or the temporary identifier of the UE.

Optionally, before the second core network element in the second area receives the response message from the network element selection function device in the second area for the second request message, Manner 2 further includes: The network element selection function device in the second area determines the address of the first core network element in the first area based on the first identifier of the terminal device.

That the network element selection function device in the second area determines the address of the first core network element in the first area based on the first identifier of the terminal device may be: performing indexing based on the first identifier, and determining the address of the first core network element in the first area corresponding to the first identifier. Herein, the address of the first core network element in the first area may be an address determined and stored by the network element selection function device in the second area in S410 or before S410.

Manner 3: The second core network element in the second area obtains the address of the first core network element in the first area from the storage function network element in the second area.

Manner 3 herein corresponds to Manner 3 in Case 1 of S420, that is, the first information herein is the first information in Manner 3 in Case 1 of S420.

Optionally, that the second core network element in the second area obtains the address of the first core network element in the first area from the storage function network element in the second area includes: The second core network element in the second area sends a third request message to the storage function network element in the second area, where the third request message includes the first identifier of the terminal device, and the third request message is used to request to obtain the address of the first core network element in the first area; and receives a response message from the storage function network element in the second area for the third request message, where the response message for the third request message includes the address that is of the first core network element in the first area and that corresponds to the first identifier of the terminal device.

For example, the second core network element in the second area is the SMF in the roaming area in FIG. 2 or FIG. 3. The SMF in the roaming area sends a third request message to the storage function network element in the roaming area, where the third request message includes a permanent identifier or a temporary identifier of the UE; and receives a response message from the storage function network element in the roaming area for the third request message, where the response message for the third request message includes the address that is of the SMF in the home area and that corresponds to the permanent identifier or the temporary identifier of the UE.

Optionally, before the second core network element in the second area receives the response message from the storage function network element in the second area for the third request message, Manner 3 further includes: The storage function network element in the second area determines the address of the first core network element in the first area based on the first identifier of the terminal device.

That the storage function network element in the second area determines the address of the first core network element in the first area based on the first identifier of the terminal device may be: performing indexing based on the first identifier, and determining the address of the first core network element in the first area corresponding to the first identifier.

Manner 4: The second core network element in the second area receives, via the access network device in the second area, a first request message sent by the terminal device, where the first request message includes the first slice information of the first area and the first identifier of the terminal device; obtains the subscription data of the terminal device from the UDM in the first area based on the first identifier of the terminal device; and determines the address of the first core network element in the first area based on the first slice information of the first area and the subscription data.

Optionally, when the first core network element is an SMF, the first request message may further include at least one of a DNN, a PDU session identifier, or NSSAI 1. Optionally, the first request message may be a PDU session establishment request message. Optionally, when the first request message includes NSSAI 1, the NSSAI 1 may be the first slice information of the first area.

Optionally, when the first core network element is a PCF, the first request message may be a policy establishment request message of the terminal device.

Optionally, when the first identifier of the terminal device is a permanent identifier of the terminal device, that the second core network element in the second area obtains the subscription data of the terminal device from the UDM in the first area based on the first identifier of the terminal device includes: The second core network element in the second area sends the first identifier to the UDM in the first area, and receives, from the UDM in the first area, the subscription data of the terminal device corresponding to the first identifier.

Optionally, when the first identifier of the terminal device is a temporary identifier of the terminal device, that the second core network element in the second area obtains the subscription data of the terminal device from the UDM in the first area based on the first identifier of the terminal device includes: The second core network element in the second area obtains a second identifier of the terminal device corresponding to the first identifier from the storage function network element in the second area, where the storage function network element is configured to store the correspondence between the first identifier and the second identifier, where the second identifier is a permanent identifier of the terminal device; sends the second identifier to the UDM in the first area; and receives the subscription data of the terminal device corresponding to the second identifier from the UDM in the first area.

Optionally, the second core network element in the second area receives, via the access network device in the second area, the first request message sent by a third core network element in the second area, where the first request message includes the first slice information of the first area and the first identifier of the terminal device. For example, the third core network element in the second area is an AMF in the second area.

For a process in which the second core network element in the second area determines the address of the first core network element in the first area based on the first slice information of the first area and the subscription data, refer to Manner 1 in Case 1 of S410. To avoid repetition, details are not described herein.

In Manner 4, the second core network element in the roaming area obtains the first identifier of the terminal device and the first slice information of the home area via the access network device in the roaming area. The second core network element in the roaming area obtains the subscription data of the terminal device based on the first identifier, and determines the address of the first core network element in the home area based on the obtained subscription data and the first slice information of the home area. In other words, the second core network element in the roaming area determines the address of the first core network element in the home area based on the obtained subscription data and the first slice information. In this way, the second core network element in the roaming area can determine the address of the first core network element in the home area, transmit signaling of the terminal device to the first core network element in the home area, and establish a connection to the first core network element in the home area, so that a network operator in the home area can obtain communication data of the terminal device, thereby helping improve interests of the network operator.

Manner 5: The second core network element in the second area obtains the second identifier from the storage function network element in the second area, where the second identifier is a permanent identifier of the terminal device; sends the second identifier to the UDM in the first area; receives the subscription data of the terminal device corresponding to the second identifier from the UDM in the first area; sends the subscription data to the network element selection function device in the second area; and receives, from the network element selection function device in the second area, the address of the first core network element in the first area, where the address is determined by the network element selection function device in the second area based on the subscription data.

Optionally, that the second core network element in the second area obtains the second identifier from the storage function network element in the second area includes: The second core network element in the second area sends the first identifier of the terminal device to the storage function network element in the second area, where the first identifier is a temporary identifier of the terminal device; and obtains the second identifier corresponding to the first identifier from the storage function network element in the second area.

Optionally, that the network element selection function device in the second area determines the address of the first core network element in the first area based on the subscription data includes: The network element selection function device in the second area determines the address of the first core network element in the first area based on the first slice information of the first area and the subscription data. Herein, this is the same as that in Manner 1 in Case 1 of S410. To avoid repetition, details are not described herein.

In Manner 5, the second core network element in the roaming area may obtain the permanent identifier of the terminal device from the storage function network element in the roaming area, obtain the subscription data of the terminal device from the UDM function network element in the home area based on the permanent identifier of the terminal device, and send the subscription data to the network element selection function device in the roaming area. The network element selection function device in the roaming area receives the subscription data, determines the address of the first core network element in the home area based on the subscription data, and sends the determined address of the first core network element in the home area to the second core network element in the roaming area. In this way, the address of the first core network element in the home area cannot be obtained by the access network device in the roaming area, thereby improving security of the address of the first core network element in the home area.

Case 2: The first area is a roaming area of the terminal device, and the second area is a home area of the terminal device.

Case 2 of S430 corresponds to Case 2 of S420 and S410. Case 2 is applied to the roaming architecture shown in FIG. 3.

Optionally, the second core network element in the second area receives the first information sent by the network element selection function in the second area, where the first information includes the address of the first core network element in the first area.

It may be understood that the first information herein is the first information in Case 2 of S420. That the second core network element in the second area receives the first information sent by the network element selection function in the second area indicates that the second core network element in the second area obtains the address of the first core network element in the first area from the network element selection function device in the second area.

S440: The second core network element in the second area transmits signaling of the terminal device based on the address of the first core network element in the first area.

Optionally, S440 includes: The second core network element in the second area sends the signaling of the terminal device to the first core network element in the first area based on the address of the first core network element in the first area.

Optionally, the signaling of the terminal device may be a control plane instruction. For example, the control plane instruction may be a PDU session establishment request message, or may be a policy establishment request message of the terminal device.

For example, the second core network element in the second area is the SMF in the roaming area in FIG. 2 (or FIG. 3). The SMF in the roaming area in FIG. 2 (or FIG. 3) establishes a connection to the SMF in the home area based on the address of the SMF in the home area, and sends a PDU session establishment request message to the SMF in the home area.

For another example, the second core network element in the second area is the PCF in the roaming area in FIG. 2 (or FIG. 3). The PCF in the roaming area in FIG. 2 (or FIG. 3) establishes a connection to the PCF in the home area based on the address of the PCF in the home area, and sends a policy establishment request message of the UE to the PCF in the home area.

In the communication method 400, the foregoing is a process in which the network element selection function device in the second area obtains the address of the first core network element in the first area, and sends the first information, where the first information is used by the second core network element in the second area to obtain the address of the first core network element in the first area; and the second core network element in the second area obtains the address of the first core network element in the first area, and transmits the signaling of the terminal device based on the address of the first core network element. In this way, a connection between the core network element in the roaming area and the core network element in the home area can be established, so that a network operator in the home area can obtain communication data of the terminal device, thereby helping improve interests of the network operator.

In addition, the network element selection function device in the second area in the communication method 400 may further obtain the address of the second core network element in the second area. For example, the network element selection function device in the roaming area in FIG. 2 or FIG. 3 may obtain the address of the SMF and/or the address of the PCF in the roaming area, or the network element selection function device in the home area in FIG. 3 may obtain the address of the SMF and/or the address of the PCF in the home area. The following describes a process in which the network element selection function device in the second area obtains the address of the second core network element in the second area.

Optionally, when the first area is a home area of the terminal device, and the second area is a roaming area of the terminal device, that the network element selection function device in the second area obtains the address of the second core network element in the second area includes: The network element selection function device in the second area obtains second slice information of the second area; and determines the address of the second core network element in the second area based on the second slice information of the second area and the subscription data.

Optionally, that the network element selection function device in the second area obtains the second slice information of the second area may be that the network element selection function device in the second area further obtains the second slice information of the second area when the network element selection function device in the second area obtains the first identifier of the terminal device and the first slice information of the first area in Case 1 of S410.

Optionally, the second slice information of the second area may indicate NSSAI corresponding to the second area.

Optionally, when the second core network element is an SMF, the NSSAI corresponding to the second area may be NSSAI requested by the terminal device in the second area, or may be NSSAI allowable in the second area.

Optionally, when the second core network element is a PCF, the NSSAI corresponding to the second area may be NSSAI allowable in the second area.

It may be understood that there is usually a correspondence between NSSAI and a core network element. Therefore, the network element selection function device in the second area may determine the address of the second core network element from a plurality of core network elements in the second area based on the second slice information of the second area and the subscription data. The plurality of core network elements herein have a same function. For example, the plurality of core network elements are all PCFs and have a function of generating a policy of the terminal device. For another example, the plurality of core network elements are all SMFs and have a session management function.

The network element selection function device in the second area may determine the address of the second core network element from the plurality of core network elements in the second area based on a plurality of factors. This is not limited in embodiments of this application.

Optionally, when the second core network element is an SMF, the network element selection function device in the second area may determine the address of the second core network element from the plurality of core network elements in the second area based on the subscription data of the terminal device, or may determine the address of the second core network element from the plurality of core network elements in the second area based on the subscription data of the terminal device and at least one of a DNN, a PDU session identifier, or the second slice information of the second area.

For example, the second core network element is the SMF in the roaming area in FIG. 2 or FIG. 3, and the UE sends a PDU session establishment request message to the network element selection function device in the roaming area via the RAN in the roaming area. The PDU session establishment request message includes: a DNN, a PDU session identifier, second slice information of the roaming area, and a first identifier of the UE. The network element selection function device in the roaming area obtains subscription data of the UE based on the first identifier of the UE, and determines an address of the SMF in the roaming area in FIG. 2 or FIG. 3 from a plurality of SMFs in the roaming area based on the obtained subscription data of the UE, the DNN, the PDU session identifier, and the second slice information of the roaming area.

Optionally, when the second core network element is a PCF, the network element selection function device in the second area may determine the address of the second core network element from the plurality of core network elements in the second area based on the subscription data of the terminal device.

For example, the second core network element is the PCF in the roaming area in FIG. 2 or FIG. 3, and the UE sends a policy establishment request message of the UE to the network element selection function device in the roaming area via the RAN in the roaming area. The policy establishment request message of the UE includes a first identifier of the UE. The network element selection function device in the roaming area obtains subscription data of the UE based on the first identifier of the UE, and determines an address of the PCF in the roaming area in FIG. 2 or FIG. 3 from a plurality of PCFs in the roaming area based on the obtained subscription data of the UE.

It may be understood that the network element selection function device in the second area may obtain the address of the second core network element in the second area and the address of the first core network element in the first area simultaneously; or may first obtain the address of the second core network element in the second area and then obtain the address of the first core network element in the first area; or may first obtain the address of the first core network element in the first area and then obtain the address of the second core network element in the second area. This is not limited in embodiments of this application.

Optionally, after the network element selection function device in the second area obtains the address of the second core network element in the second area, the communication method 400 further includes: The network element selection function device in the second area sends second information to the access network device in the second area, where the second information indicates the address of the second core network element in the second area. Optionally, the second information may be information including the address of the second core network element in the second area. In other words, the network element selection function device in the roaming area may obtain an address of the second core network element in the roaming area, and send the address of the second core network element in the roaming area to the access network device in the roaming area. In this way, the access network device in the roaming area may establish a connection to the second core network element in the roaming area based on the address of the second core network element in the roaming area, and transmit signaling of the terminal device through the connection.

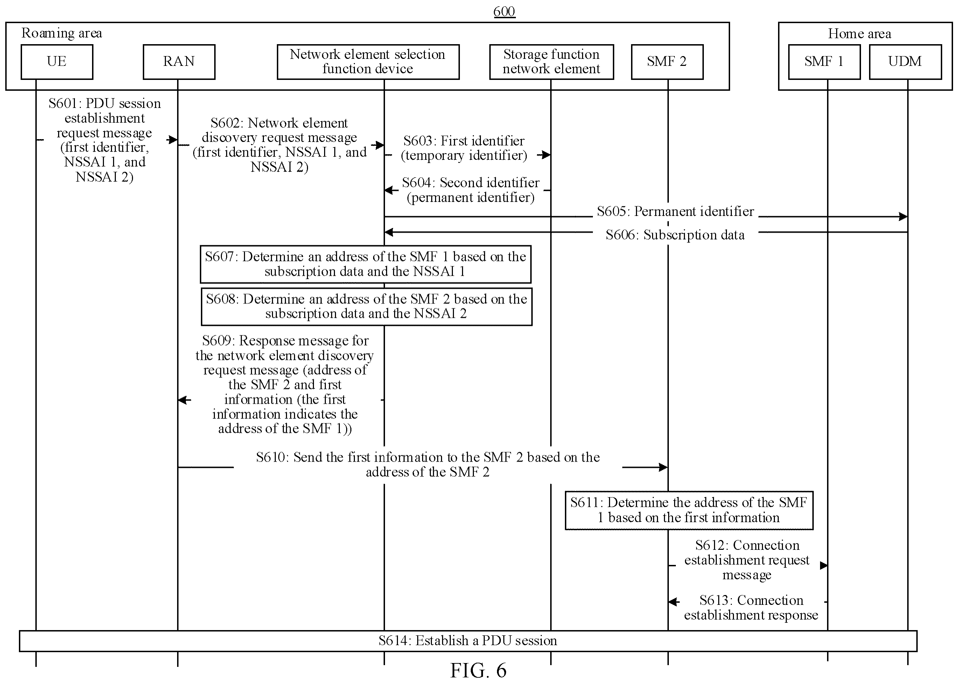

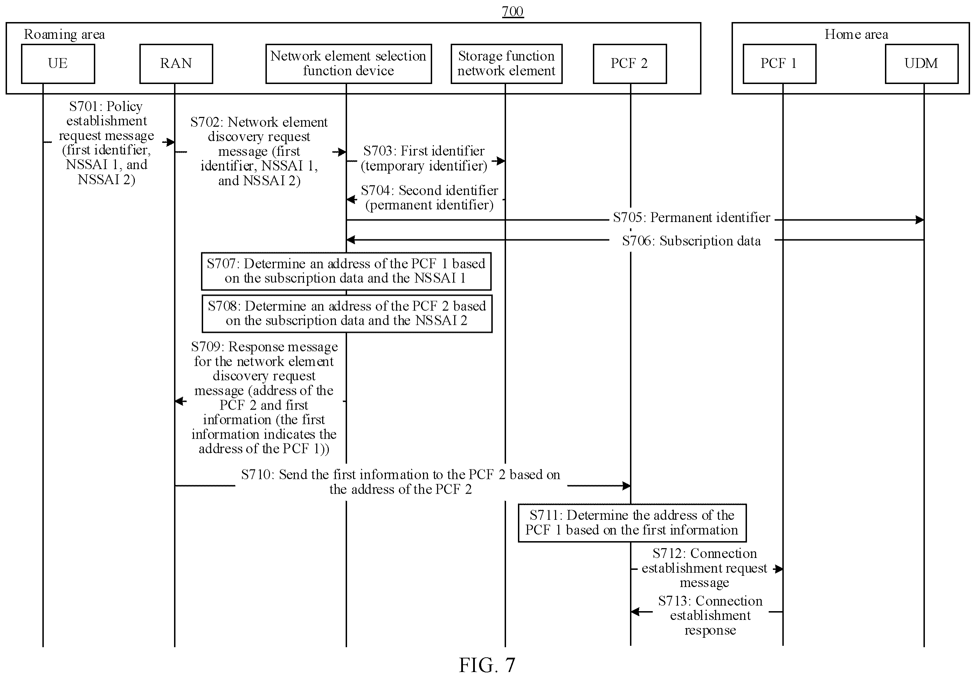

To better understand Manner 1 in Case 1 of S420 and Manner 1 in Case 1 of S430 in the communication method 400, the following describes a detailed implementation procedure with reference to FIG. 6 and FIG. 7.

In FIG. 6, an example in which the first area is a home area, the second area is a roaming area, the first core network element in the first area is an SMF 1, the second core network element in the second area is an SMF 2, the terminal device is UE, the access network device is a RAN, and a unified data management function network element is a UDM is used for description. For functions of the UE, the RAN, a network element selection function device, a storage function network element, the SMF 2 in the roaming area, and the SMF 1 and the UDM in the home area in FIG. 6, refer to the descriptions in the communication method 400. As shown in FIG. 6, the method 600 includes the following steps.

S601: The UE sends a PDU session establishment request message to the RAN, and the RAN receives the PDU session establishment request message from the UE. The PDU session establishment request message includes a first identifier, NSSAI 1, and NSSAI 2.

Optionally, the NSSAI 1 may be obtained by mapping NSSAI requested by the UE in the roaming area, or may be obtained by mapping NSSAI allowable in the roaming area. The NSSAI 2 may be NSSAI requested by the UE in the roaming area, or may be NSSAI allowable in the roaming area.

Optionally, the PDU session establishment request message may further include a DNN and/or a PDU session identifier.

Optionally, the RAN may not parse the PDU session establishment request message. In this case, when sending the PDU session establishment request message to the RAN, the UE further sends at least one of the following: the NSSAI 1, the NSSAI 2, the DNN, and the PDU session identifier.

For example, the UE may be the terminal device in the communication method 400, the RAN may be the access network device in the communication method 400, and the first identifier may be the first identifier of the terminal device in the communication method 400. The NSSAI 1 may be the first slice information of the first area when the first core network element is an SMF in Case 1 of the communication method 400, and the NSSAI 2 may be the second slice information of the second area when the first core network element is an SMF in Case 1 of the communication method 400.

Optionally, before S601, the method 600 may further include a process in which the UE initiates a registration request, where the registration request process is used to allow the UE to access a network in the roaming area. In the registration request process, the storage function network element in the roaming area in FIG. 6 may store a temporary identifier and a permanent identifier of the terminal device, and a correspondence between the temporary identifier and the permanent identifier.

S602: The RAN sends a network element discovery request message to a network element selection function device, and the network element selection function device receives the network element discovery request message from the RAN. The network element discovery request message includes the first identifier, the NSSAI 1, and the NSSAI 2.

Optionally, when the PDU session establishment request message further includes the DNN, the network element discovery request message may further include the DNN. Optionally, when the PDU session establishment request message further includes the PDU session identifier, the network element discovery request message may further include the PDU session identifier. Optionally, when the PDU session establishment request message further includes the DNN and the PDU session identifier, the network element discovery request message may further include the DNN and the PDU session identifier.

For example, S602 may be a process in which the network element selection function device in the second area obtains the first identifier of the terminal device, the first slice information of the first area, and the second slice information of the second area in S410 in the communication method 400.

S603: The network element selection function device sends the first identifier (temporary identifier) to the storage function network element, and the storage function network element receives the first identifier (temporary identifier) from the network element selection function device.

For example, the network element selection function device may be the network element selection function device in the second area in Case 1 of the communication method 400, and the storage function network element may be the storage function network element in the second area in Case 1 of the communication method 400.

S604: The storage function network element sends a second identifier to the network element selection function device, and the network element selection function device receives the second identifier from the storage function network element.

For example, the second identifier may be the second identifier of the terminal device in the communication method 400, that is, the second identifier is a permanent identifier of the terminal device.

Herein, if the first identifier included in S602 is a temporary identifier, S603 and S604 may exist. If the first identifier included in S602 is a permanent identifier, S603 and S604 may not exist, and S605 may be directly performed.

S605: The network element selection function device sends the permanent identifier to the UDM, and the UDM receives the permanent identifier from the network element selection function device.

For example, the UDM may be the UDM in the first area in Case 1 of the communication method 400.

Optionally, after S605, the UDM determines, based on the received permanent identifier, subscription data of the UE corresponding to the permanent identifier.

S606: The UDM sends the subscription data to the network element selection function device, and the network element selection function device receives the subscription data from the UDM.

For example, the subscription data may be the subscription data of the terminal device in the communication method 400. S605 and S606 may be a process in which the network element selection function device in the second area obtains, from the UDM in the second area based on the permanent identifier, the subscription data corresponding to the permanent identifier of the terminal device in Case 1 of S410 in the communication method 400.

S607: The network element selection function device determines an address of the SMF 1 based on the subscription data and the NSSAI 1.

Optionally, when the network element discovery request message in S602 further includes the DNN, the network element selection function device may further determine the address of the SMF 1 based on the DNN, the NSSAI 1, and the subscription data. Optionally, when the network element discovery request message in S602 further includes the PDU session identifier, the network element selection function device may further determine the address of the SMF 1 based on the PDU session identifier, the NSSAI 1, and the subscription data. Optionally, when the network element discovery request message in S602 further includes the DNN and the PDU session identifier, the network element selection function device may further determine the address of the SMF 1 based on the PDU session identifier, the DNN, the NSSAI 1, and the subscription data.

For example, S607 may be Manner 1 in Case 1 of S410 in the communication method 400.

S608: The network element selection function device determines an address of the SMF 2 based on the subscription data and the NSSAI 2.

Optionally, when the network element discovery request message in S602 further includes the DNN, the network element selection function device may further determine the address of the SMF 2 based on the DNN, the NSSAI 2, and the subscription data. Optionally, when the network element discovery request message in S602 further includes the PDU session identifier, the network element selection function device may further determine the address of the SMF 2 based on the PDU session identifier, the NSSAI 2, and the subscription data. Optionally, when the network element discovery request message in S602 further includes the DNN and the PDU session identifier, the network element selection function device may further determine the address of the SMF 2 based on the PDU session identifier, the DNN, the NSSAI 2, and the subscription data.

For example, S607 may be a process in which the network element selection function device in the second area obtains the address of the second core network element in the second area in Case 1 of the communication method 400.

There is no requirement on a sequence of performing S607 and S608. In other words, S608 may be performed before S607, or S607 and S608 may be performed simultaneously.

S609: The network element selection function device sends a response message to the RAN for the network element discovery request message, and the RAN receives the response message from the network element selection function device for the network element discovery request message. The response message for the network element discovery request message includes the address of the SMF 2 and first information, and the first information indicates the address of the SMF 1.

For example, the first information may be the first information in Manner 1 in Case 1 of S420 in the communication method 400.

Optionally, after S609, the RAN may store the address of the SMF 2. In this way, when the UE initiates another PDU session establishment request message, the UE can directly obtain the address of the SMF 2 from the RAN, and the network element selection function device does not need to re-determine the address of the SMF 2, thereby reducing signaling overheads.

S610: The RAN sends the first information to the SMF 2 based on the address of the SMF 2, and the SMF 2 receives the first information from the RAN.

Optionally, the RAN may further send the PDU session establishment request message in S601 to the SMF 2 based on the address of the SMF 2.

For example, S609 and S610 may be Manner 1 in Case 1 of S420 in the communication method 400.

S611: The SMF 2 determines the address of the SMF 1 based on the first information.

For example, S611 may be Manner 1 in Case 1 of S430 in the communication method 400.

S612: The SMF 2 sends a connection establishment request message to the SMF 1 based on the address of the SMF 1, and the SMF 1 receives the connection establishment request message from the SMF 2.

The connection establishment request message is used to establish a connection between the SMF 1 and the SMF 2.

Optionally, in S610, when sending the first information to the SMF 2 based on the address of the SMF 2, the RAN further sends the PDU session establishment request message, to establish a PDU session for the UE.

S613: The SMF 1 sends a connection establishment response to the SMF 2, and the SMF 2 receives the connection establishment response from the SMF 1.

Optionally, the connection establishment response may be a response indicating that the connection between the SMF 1 and the SMF 2 is successfully established.

S614: Establish a PDU session.

Optionally, if the connection establishment request message in S612 is the PDU session establishment request message, the SMF 1 and the SMF 2 may establish the PDU session based on a parameter included in the PDU session establishment request message. Herein, another core network element may participate in the process of establishing the PDU session. For example, the another core network element may include a UPF in the roaming area and a UPF in the home area. For a specific PDU session establishment process, refer to the conventional technology. Details are not described herein again.

In the method 600 in FIG. 6, the network element selection function device in the roaming area determines the address of the SMF 1 based on the NSSAI 1 and the subscription data, and determines the address of the SMF 2 based on the NSSAI 2 and the subscription data. The network element selection function device in the roaming area sends the first information to the SMF 2 based on the address of the SMF 2, and the first information indicates the address of the SMF 1. The SMF 2 determines the address of the SMF 1 based on the received first information, and the SMF 2 sends the connection establishment request message to the SMF 1 based on the address of the SMF 1, to establish the connection between the SMF 2 and the SMF 1. The RAN in the roaming area does not parse the first information, and the SMF 2 parses the first information to obtain the address of the SMF 1. In this way, the address of the SMF 1 cannot be obtained by the RAN in the roaming area, thereby improving security of the address of the SMF 1.

It may be understood that, in the method 600, the network element selection function device in the roaming area may not determine the address of the SMF 2, that is, S608 is an optional step. In other words, the RAN in the roaming area may store the address of the SMF 2, or the RAN in the roaming area may obtain the address of the SMF 2 from another core network element in the roaming area. This is not limited in embodiments of this application.

In FIG. 7, an example in which the first area is a home area, the second area is a roaming area, the first core network element in the first area is a PCF 1, the second core network element in the second area is a PCF 2, the terminal device is UE, the access network device is a RAN, and a unified data management function network element is a UDM is used for description. For functions of the UE, the RAN, a network element selection function device, a storage function network element, the PCF 2 in the roaming area, and the PCF 1 and the UDM in the home area in FIG. 7, refer to the descriptions in the communication method 400. As shown in FIG. 7, the method 700 includes the following steps.

S701: The UE sends a policy establishment request message to the RAN, and the RAN receives the policy establishment request message from the UE. The policy establishment request message includes a first identifier, NSSAI 1, and NSSAI 2.

Optionally, the NSSAI 1 may be obtained by mapping NSSAI allowable in the roaming area, and the NSSAI 2 may be NSSAI allowable in the roaming area.

It should be noted that S701 is an optional step.

For example, the UE may be the terminal device in the communication method 400, the RAN may be the access network device in the communication method 400, and the first identifier may be the first identifier of the terminal device in the communication method 400. The NSSAI 1 may be the first slice information of the first area when the first core network element is a PCF in Case 1 of the communication method 400, and the NSSAI 2 may be the second slice information of the second area when the first core network element is a PCF in Case 1 of the communication method 400.

Optionally, before S701, the method 700 may further include a process in which the UE initiates a registration request, where the registration request process is used to allow the UE to access a network in the roaming area. In the registration request process, the storage function network element in the roaming area in FIG. 7 may store a temporary identifier and a permanent identifier of the terminal device, and a correspondence between the temporary identifier and the permanent identifier.

S702 to S706 are respectively the same as S602 to S606 in FIG. 6. To avoid repetition, details are not described herein.

S707: The network element selection function device determines an address of the PCF 1 based on the subscription data and the NSSAI 1.

For example, S707 may be Manner 1 in Case 1 of S410 in the communication method 400.

S708: The network element selection function device determines an address of the PCF 2 based on the subscription data and the NSSAI 2.

For example, S708 may be a process in which the network element selection function device in the second area obtains the address of the second core network element in the second area in Case 1 of the communication method 400.

There is no requirement on a sequence of performing S707 and S708. In other words, S708 may be performed before S707, or S707 and S708 may be performed simultaneously.

S709: The network element selection function device sends a response message to the RAN for the network element discovery request message, and the RAN receives the response message from the network element selection function device for the network element discovery request message. The response message for the network element discovery request message includes the address of the PCF 2 and first information, and the first information indicates the address of the PCF 1.

For example, the first information may be the first information in Manner 1 in Case 1 of S420 in the communication method 400.

S710: The RAN sends the first information to the PCF 2 based on the address of the PCF 2, and the PCF 2 receives the first information from the RAN.

Optionally, the RAN may further send the policy establishment request message to the PCF 2 based on the address of the PCF 2.

For example, S710 may be Manner 1 in Case 1 of S420 in the communication method 400.

S711: The PCF 2 determines the address of the PCF 1 based on the first information.

For example, S711 may be Manner 1 in Case 1 of S430 in the communication method 400.

S712: The PCF 2 sends a connection establishment request message to the PCF 1 based on the address of the PCF 1, and the PCF 1 receives the connection establishment request message from the PCF 2. The connection establishment request message is used to establish a connection between the PCF 1 and the PCF 2.

Optionally, in S710, when sending the first information to the PCF 2 based on the address of the PCF 2, the RAN further sends the policy establishment request message, to establish a policy connection for the UE, so that the UE can obtain a policy of the UE from the PCF 1 and/or the PCF 2.

Optionally, after S712, the PCF 1 may generate the policy of the UE based on the connection establishment request message.

S713: The PCF 1 sends a connection establishment response to the PCF 2, and the PCF 2 receives the connection establishment response from the PCF 1.

Optionally, the connection establishment response may include the policy of the UE.

In the method 700 in FIG. 7, the network element selection function device in the roaming area determines the address of the PCF 1 based on the NSSAI 1 and the subscription data, and determines the address of the PCF 2 based on the NSSAI 2 and the subscription data. The network element selection function device in the roaming area sends the first information to the PCF 2 based on the address of the PCF 2, and the first information indicates the address of the PCF 1. The PCF 2 determines the address of the PCF 1 based on the received first information, and the PCF 2 sends the connection establishment request message to the PCF 1 based on the address of the PCF 1, to establish the connection between the PCF 2 and the PCF 1. The RAN in the roaming area does not parse the first information, and the PCF 2 parses the first information to obtain the address of the PCF 1. In this way, the address of the PCF 1 cannot be obtained by the RAN in the roaming area, thereby improving security of the address of the PCF 1.

It may be understood that, in the method 700, the network element selection function device in the roaming area may not determine the address of the PCF 2, that is, S708 is an optional step. In other words, the RAN in the roaming area may store the address of the PCF 2, or the RAN in the roaming area may obtain the address of the PCF 2 from another core network element in the roaming area. This is not limited in embodiments of this application.

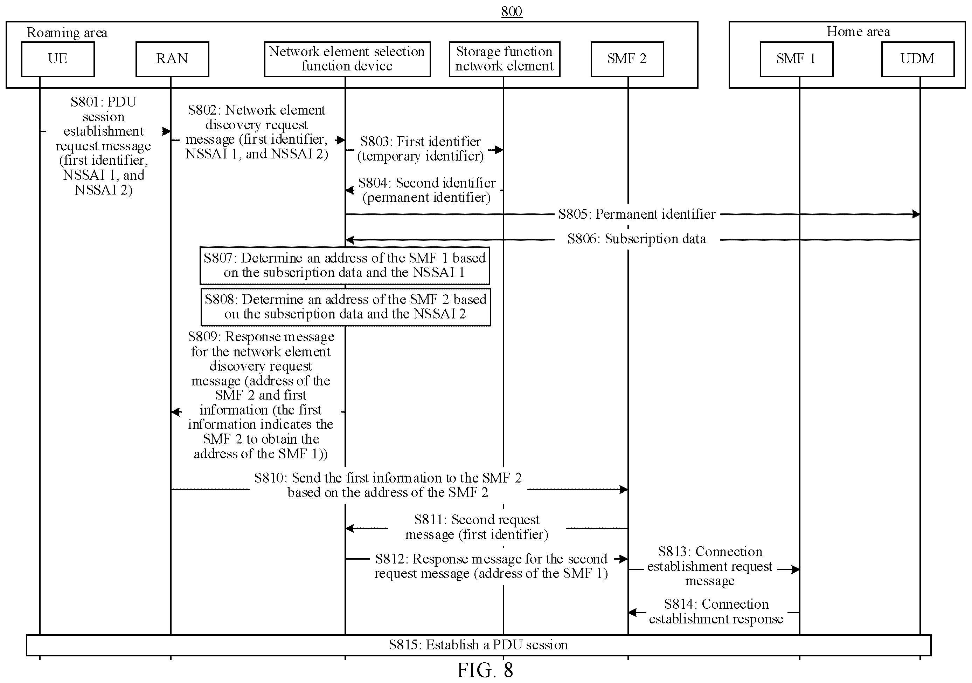

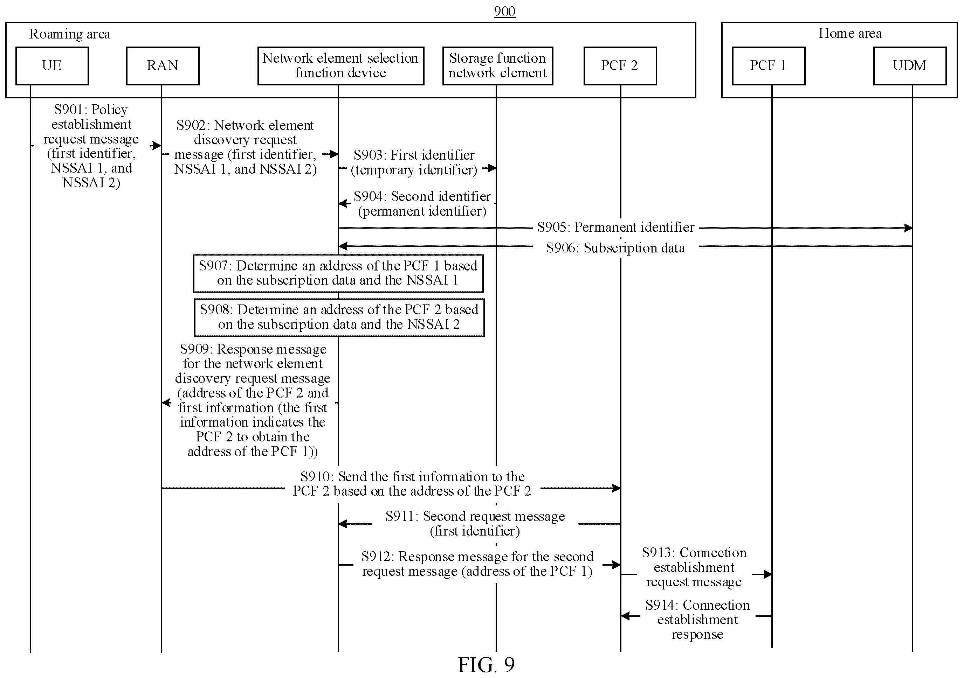

To better understand Manner 2 in Case 1 of S420 and Manner 2 in Case 1 of S430 in the communication method 400, the following describes a detailed implementation procedure with reference to FIG. 8 and FIG. 9.

In FIG. 8, an example in which the first area is a home area, the second area is a roaming area, the first core network element in the first area is an SMF 1, the second core network element in the second area is an SMF 2, the terminal device is UE, the access network device is a RAN, and a unified data management function network element is a UDM is used for description. For functions of the UE, the RAN, a network element selection function device, a storage function network element, the SMF 2 in the roaming area, and the SMF 1 and the UDM in the home area in FIG. 8, refer to the descriptions in the communication method 400. As shown in FIG. 8, the method 800 includes the following steps.

S801 to S808 are respectively the same as S601 to S608 in FIG. 6. To avoid repetition, details are not described herein.

S809: The network element selection function device sends a response message to the RAN for the network element discovery request message, and the RAN receives the response message from the network element selection function device for the network element discovery request message. The response message for the network element discovery request message includes the address of the SMF 2 and first information, and the first information indicates the SMF 2 to obtain the address of the SMF 1.

For example, the first information may be the first information in Manner 2 in Case 1 of S420 in the communication method 400.

Optionally, after S809, the RAN may store the address of the SMF 2. In this way, when the UE initiates another PDU session establishment request message, the UE can directly obtain the address of the SMF 2 from the RAN, and the network element selection function device does not need to re-determine the address of the SMF 2, thereby reducing signaling overheads.

S810: The RAN sends the first information to the SMF 2 based on the address of the SMF 2, and the SMF 2 receives the first information from the RAN.

Optionally, the RAN may further send the PDU session establishment request message in S601 to the SMF 2 based on the address of the SMF 2.

For example, 809 and S810 may be Manner 2 in Case 1 of S420 in the communication method 400.

S811: The SMF 2 sends a second request message to the network element selection function device, and the network element selection function device receives the second request message from the SMF 2. The second request message includes the first identifier.

For example, the second request message may be the second request message in Manner 2 in Case 1 of S430 in the communication method 400.

S812: The network element selection function device sends a response message to the SMF 2 for the second request message, and the SMF 2 receives the response message from the network element selection function device for the second request message. The response message for the second request message includes the address of the SMF 1.

For example, S811 and S812 may be Manner 2 in Case 1 of S430 in the communication method 400.

S813 to S815 are respectively the same as S612 to S614 in FIG. 6. To avoid repetition, details are not described herein.

In the method 800 in FIG. 8, the network element selection function device in the roaming area determines the address of the SMF 1 based on the NSSAI 1 and the subscription data, and determines the address of the SMF 2 based on the NSSAI 2 and the subscription data. The network element selection function device in the roaming area sends the first information to the SMF 2 based on the address of the SMF 2, and the first information indicates the SMF 2 to obtain the address of the SMF 1. The SMF 2 obtains the address of the SMF 1 from the network element selection function device in the roaming area, the SMF 2 sends the connection establishment request message to the SMF 1 based on the address of the SMF 1, to establish the connection between the SMF 2 and the SMF 1. The first information does not include the address of the SMF 1, and the RAN in the roaming area cannot directly obtain the address of the SMF 1 based on the received first information, so that security of the address of the SMF 1 can be improved. In addition, encapsulation processing in a container form does not need to be performed on the address that is of the SMF 1 and that is determined by the network element selection function device in the roaming area, so that a function of the network element selection function device in the roaming area can be simplified. In other words, the RAN in the roaming area has a connection relationship with only the SMF 2 in the roaming area. This avoids RAN logical complexity and avoids a potential security problem.

In FIG. 9, an example in which the first area is a home area, the second area is a roaming area, the first core network element in the first area is a PCF 1, the second core network element in the second area is a PCF 2, the terminal device is UE, the access network device is a RAN, and a unified data management function network element is a UDM is used for description. For functions of the UE, the RAN, a network element selection function device, a storage function network element, the PCF 2 in the roaming area, and the PCF 1 and the UDM in the home area in FIG. 9, refer to the descriptions in the communication method 400. As shown in FIG. 9, the method 900 includes the following steps.

S901 to S908 are respectively the same as S701 to S708 in FIG. 7. To avoid repetition, details are not described herein.

S909: The network element selection function device sends a response message to the RAN for the network element discovery request message, and the RAN receives the response message from the network element selection function device for the network element discovery request message. The response message for the network element discovery request message includes the address of the PCF 2 and first information, and the first information indicates the PCF 2 to obtain the address of the PCF 1.

For example, the first information may be the first information in Manner 2 in Case 1 of S420 in the communication method 400.

S910: The RAN sends the first information to the PCF 2 based on the address of the PCF 2, and the PCF 2 receives the first information from the RAN.

Optionally, the RAN may further send the policy establishment request message to the PCF 2 based on the address of the PCF 2.

For example, S909 and S910 may be Manner 2 in Case 1 of S420 in the communication method 400.

S911: The PCF 2 sends a second request message to the network element selection function device, and the network element selection function device receives the second request message from the PCF 2. The second request message includes the first identifier.

For example, the second request message may be the second request message in Manner 2 in Case 1 of S430 in the communication method 400.

S912: The network element selection function device sends a response message to the PCF 2 for the second request message, and the PCF 2 receives the response message from the network element selection function device for the second request message. The response message for the second request message includes the address of the PCF 1.

For example, S911 and S912 may be Manner 2 in Case 1 of S430 in the communication method 400.

S913 and S914 are respectively the same as S712 and S713 in FIG. 7. To avoid repetition, details are not described herein.

In the method 900 in FIG. 9, the network element selection function device in the roaming area determines the address of the PCF 1 based on the NSSAI 1 and the subscription data, and determines the address of the PCF 2 based on the NSSAI 2 and the subscription data. The network element selection function device in the roaming area sends the first information to the PCF 2 based on the address of the PCF 2, and the first information indicates the PCF 2 to obtain the address of the PCF 1. The PCF 2 obtains the address of the PCF 1 from the network element selection function device in the roaming area, and the PCF 2 sends the connection establishment request message to the PCF 1 based on the address of the PCF 1, to establish the connection between the PCF 2 and the PCF 1. The first information does not include the address of the PCF 1, and the RAN in the roaming area cannot obtain the address of the PCF 1 based on the received first information, so that security of the address of the PCF 1 can be improved. In addition, encapsulation processing in a container form does not need to be performed on the address that is of the PCF 1 and that is determined by the network element selection function device in the roaming area, so that a function of the network element selection function device in the roaming area can be simplified. In other words, the RAN in the roaming area has a connection relationship with only the PCF 2 in the roaming area. This avoids RAN logical complexity and avoids a potential security problem.

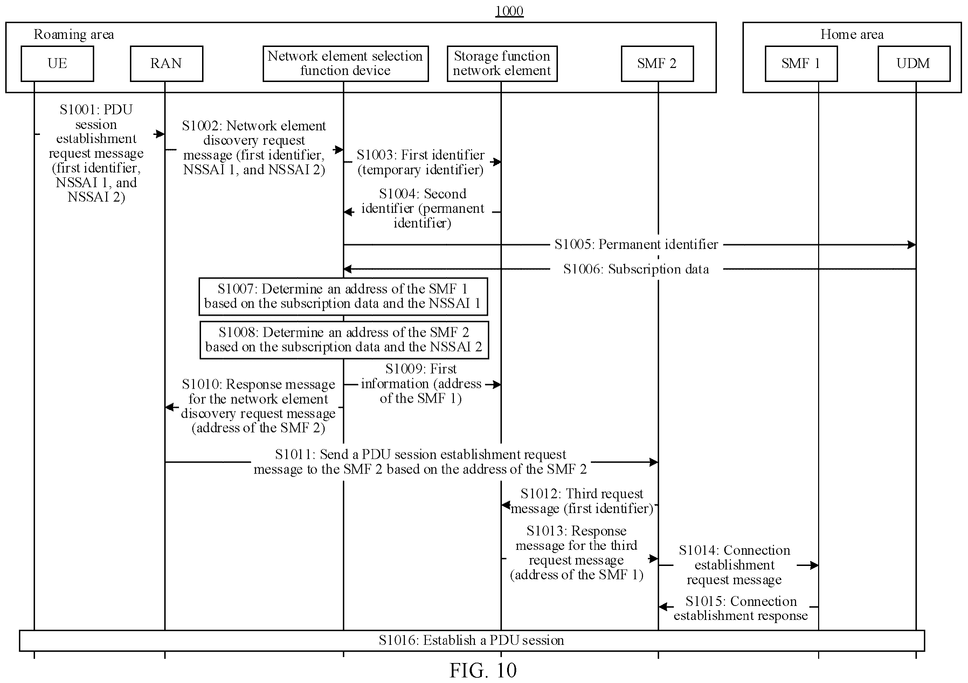

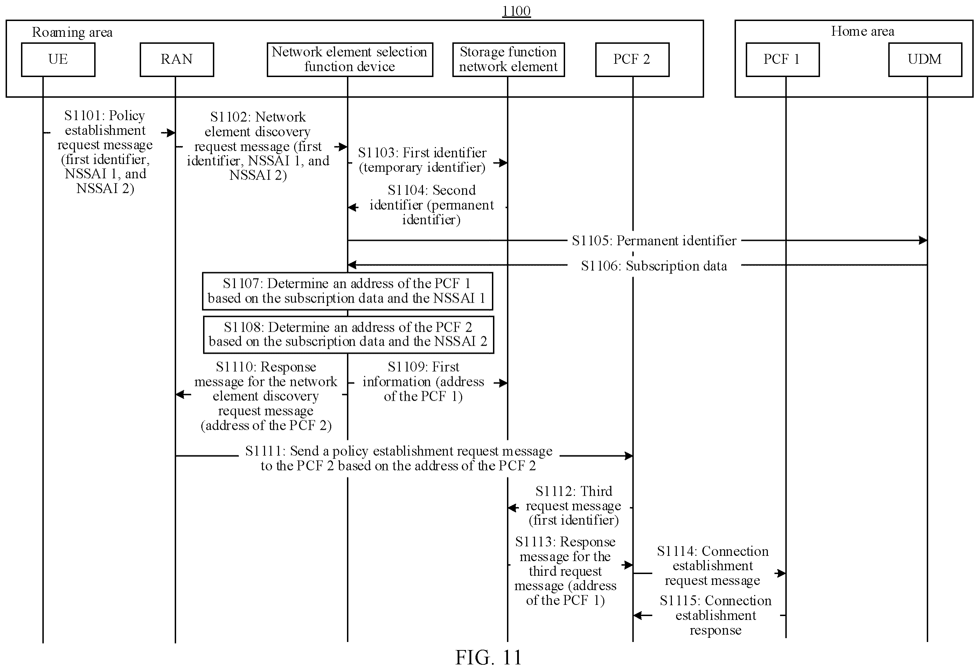

To better understand Manner 3 in Case 1 of S420 and Manner 3 in Case 1 of S430 in the communication method 400, the following describes a detailed implementation procedure with reference to FIG. 10 and FIG. 11.

In FIG. 10, an example in which the first area is a home area, the second area is a roaming area, the first core network element in the first area is an SMF 1, the second core network element in the second area is an SMF 2, the terminal device is UE, the access network device is a RAN, and a unified data management function network element is a UDM is used for description. For functions of the UE, the RAN, a network element selection function device, a storage function network element, the SMF 2 in the roaming area, and the SMF 1 and the UDM in the home area in FIG. 10, refer to the descriptions in the communication method 400. As shown in FIG. 10, the method 1000 includes the following steps.

S1001 to S1008 are respectively the same as S601 to S608 in FIG. 6. To avoid repetition, details are not described herein.

S1009: The network element selection function device sends first information to the storage function network element, and the storage function network element receives the first information from the network element selection function device. The first information includes the address of the SMF 1.

For example, the first information is the first information in Manner 3 in Case 1 of S420 in the communication method 400, and S1009 may be Manner 3 in Case 1 of S420 in the communication method 400.

S1010: The network element selection function device sends a response message to the RAN for the network element discovery request message, and the RAN receives the response message from the network element selection function device for the network element discovery request message. The response message for the network element discovery request message includes the address of the SMF 2.

Optionally, after S1010, the RAN may store the address of the SMF 2. In this way, when the UE initiates another PDU session establishment request message, the UE can directly obtain the address of the SMF 2 from the RAN, and the network element selection function device does not need to re-determine the address of the SMF 2, thereby reducing signaling overheads.

A sequence of performing S1009 and S1010 is not limited. In other words, S1010 may be performed after S1009 or before S1009.

S1011: The RAN sends a PDU session establishment request message to the SMF 2 based on the address of the SMF 2, and the SMF 2 receives the PDU session establishment request message from the RAN.

S1012: The SMF 2 sends a third request message to the storage function network element, and the storage function network element receives the third request message from the SMF 2. The third request message includes the first identifier of the terminal device.

Herein, the third request message is used to request to obtain the address of the SMF 1.

For example, the third request message may be the third request message in Manner 3 in Case 1 of S430 in the communication method 400.

S1013: The storage function network element sends a response message to the SMF 2 for the third request message, and the SMF 2 receives the response message from the storage function network element for the third request message. The response message for the third request message includes the address of the SMF 1 corresponding to the first identifier.

For example, S1012 and S1013 may be Manner 3 in Case 1 of S430 in the communication method 400.

S1014 to S1016 are respectively the same as S612 to S614 in FIG. 6. To avoid repetition, details are not described herein.

In the method 1000 in FIG. 10, the network element selection function device in the roaming area determines the address of the SMF 1 based on the NSSAI 1 and the subscription data, and determines the address of the SMF 2 based on the NSSAI 2 and the subscription data. The network element selection function device in the roaming area sends the first information to the storage function network element in the roaming area, and the first information includes the address of the SMF 1. The SMF 2 obtains the address of the SMF 1 from the storage function network element in the roaming area, and the SMF 2 sends the connection establishment request message to the SMF 1 based on the address of the SMF 1, to establish the connection between the SMF 2 and the SMF 1. In this way, the address of the SMF 1 cannot be obtained by the RAN in the roaming area, thereby improving security of the address of the SMF 1. In addition, encapsulation processing in a container form does not need to be performed on the address that is of the SMF 1 and that is determined by the network element selection function device in the roaming area, so that a function of the network element selection function device in the roaming area can be simplified. In other words, the RAN in the roaming area has a connection relationship with only the SMF 2 in the roaming area. This avoids RAN logical complexity and avoids a potential security problem.

In FIG. 11, an example in which the first area is a home area, the second area is a roaming area, the first core network element in the first area is a PCF 1, the second core network element in the second area is a PCF 2, the terminal device is UE, the access network device is a RAN, and a unified data management function network element is a UDM is used for description. For functions of the UE, the RAN, a network element selection function device, a storage function network element, the PCF 2 in the roaming area, and the PCF 1 and the UDM in the home area in FIG. 11, refer to the descriptions in the communication method 400. As shown in FIG. 11, the method 1100 includes the following steps.

S1101 to S1108 are respectively the same as S701 to S708 in FIG. 7. To avoid repetition, details are not described herein.

S1109: The network element selection function device sends first information to the storage function network element, and the storage function network element receives the first information from the network element selection function device. The first information includes the address of the PCF 1.

For example, the first information is the first information in Manner 3 in Case 1 of S420 in the communication method 400, and S1109 may be Manner 3 in Case 1 of S420 in the communication method 400.

S1110: The network element selection function device sends a response message to the RAN for the network element discovery request message, and the RAN receives the response message from the network element selection function device for the network element discovery request message. The response message for the network element discovery request message includes the address of the PCF 2.

A sequence of performing S1109 and S1110 is not limited. In other words, S1110 may be performed after S1109 or before S1109.

S1111: The RAN sends a policy establishment request message to the PCF 2 based on the address of the PCF 2, and the PCF 2 receives the policy establishment request message from the RAN.

S1112: The PCF 2 sends a third request message to the storage function network element, and the storage function network element receives the third request message from the PCF 2. The third request message includes the first identifier of the terminal device.

Herein, the third request message is used to request to obtain the address of the PCF 1.

For example, the third request message may be the third request message in Manner 3 in Case 1 of S430 in the communication method 400.

S1113: The storage function network element sends a response message to the PCF 2 for the third request message, and the PCF 2 receives the response message from the storage function network element for the third request message. The response message for the third request message includes the address of the PCF 1 corresponding to the first identifier.

For example, S1112 and S1113 may be Manner 3 in Case 1 of S430 in the communication method 400.

S1114 and S1115 are respectively the same as S712 and S713 in FIG. 7. To avoid repetition, details are not described herein.

In the method 1100 in FIG. 11, the network element selection function device in the roaming area determines the address of the PCF 1 based on the NSSAI 1 and the subscription data, and determines the address of the PCF 2 based on the NSSAI 2 and the subscription data. The network element selection function device in the roaming area sends the first information to the storage function network element in the roaming area, and the first information includes the address of the PCF 1. The PCF 2 obtains the address of the PCF 1 from the storage function network element in the roaming area, and the PCF 2 sends the connection establishment request message to the PCF 1 based on the address of the PCF 1, to establish the connection between the PCF 2 and the PCF 1. In this way, the address of the PCF 1 cannot be obtained by the RAN in the roaming area, thereby improving security of the address of the PCF 1. In addition, encapsulation processing in a container form does not need to be performed on the address that is of the PCF 1 and that is determined by the network element selection function device in the roaming area, so that a function of the network element selection function device in the roaming area can be simplified.

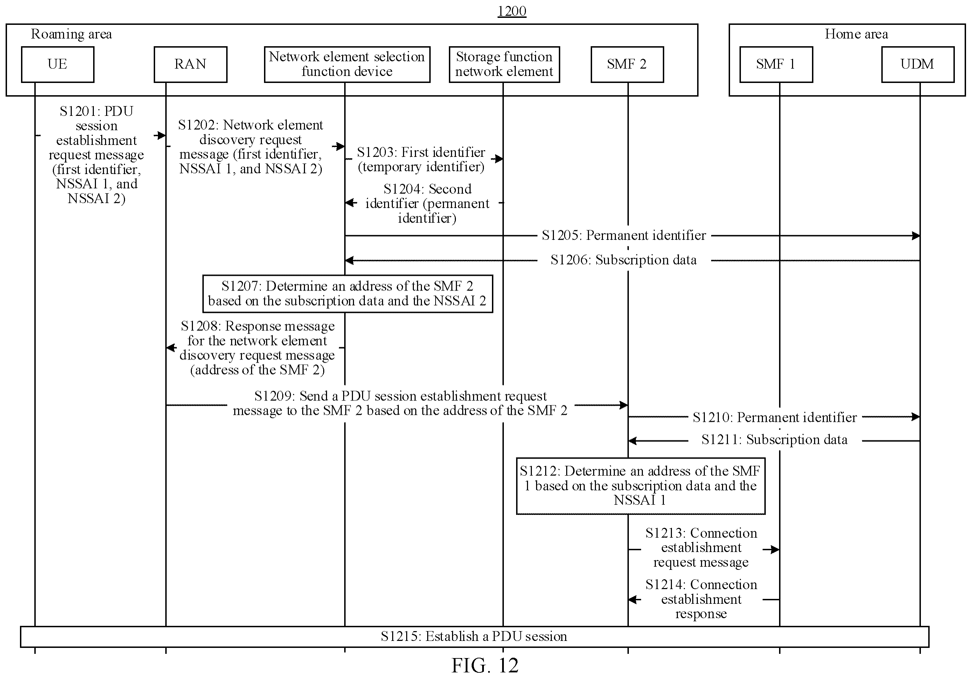

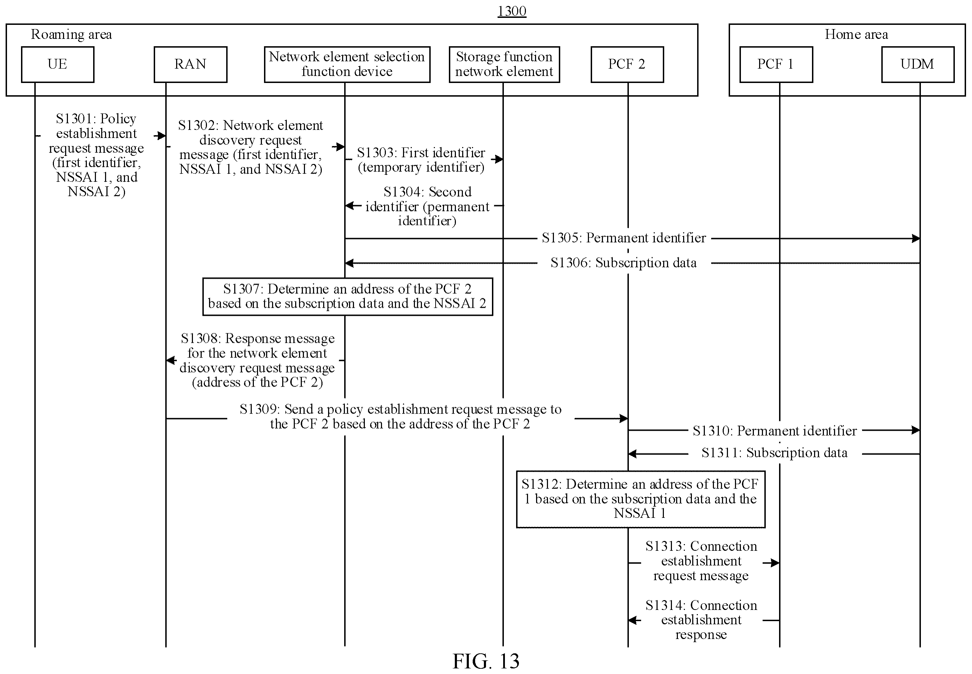

To better understand Manner 4 and Manner 5 in Case 1 of S430 in the communication method 400, the following describes a detailed implementation procedure with reference to FIG. 12 and FIG. 13.

In FIG. 12, an example in which the first area is a home area, the second area is a roaming area, the first core network element in the first area is an SMF 1, the second core network element in the second area is an SMF 2, the terminal device is UE, the access network device is a RAN, and a unified data management function network element is a UDM is used for description. For functions of the UE, the RAN, a network element selection function device, a storage function network element, the SMF 2 in the roaming area, and the SMF 1 and the UDM in the home area in FIG. 12, refer to the descriptions in the communication method 400. As shown in FIG. 12, the method 1200 includes the following steps.

S1201 to S1206 are respectively the same as S601 to S606 in FIG. 6, S1207 is the same as S608 in FIG. 6, and S1207 is an optional step. To avoid repetition, details are not described herein.

S1208: The network element selection function device sends a response message to the RAN for the network element discovery request message, and the RAN receives the response message from the network element selection function device for the network element discovery request message. The response message for the network element discovery request message includes the address of the SMF 2.

Optionally, after S1208, the RAN may store the address of the SMF 2. In this way, when the UE initiates another PDU session establishment request message, the UE can directly obtain the address of the SMF 2 from the RAN, and the network element selection function device does not need to re-determine the address of the SMF 2, thereby reducing signaling overheads.

S1209: The RAN sends a PDU session establishment request message to the SMF 2 based on the address of the SMF 2, and the SMF 2 receives the PDU session establishment request message from the RAN.

S1210: The SMF 2 sends the permanent identifier to the UDM, and the UDM receives the permanent identifier from the SMF 2.

Herein, if the first identifier included in S1201 is a temporary identifier, before S1210, the SMF 2 may obtain the permanent identifier from the storage function network element based on the first identifier.

S1211: The UDM sends the subscription data to the SMF 2, and the SMF 2 receives the subscription data from the UDM.

S1212: The SMF 2 determines an address of the SMF 1 based on the subscription data and the NSSAI 1.

For example, S1210 to S1212 may be Manner 4 in Case 1 of S430 in the communication method 400.

Herein, S1212 may also be: The SMF 2 receives, from the network element selection function device, the address that is of the SMF 1 and that is determined by the network element selection function device based on the subscription data. In this case, S1210 to S1212 are Manner 5 in Case 1 of S430 in the communication method 400.

S1213 to S1215 are respectively the same as S612 to S614 in FIG. 6. To avoid repetition, details are not described herein.

In the method 1200 in FIG. 12, the network element selection function device in the roaming area determines the address of the SMF 2 based on the NSSAI 2 and the subscription data. The RAN in the roaming area sends the PDU session establishment request message to the SMF 2 based on the address of the SMF 2. The SMF 2 obtains the subscription data from the UDM in the home area based on the first identifier in the PDU session establishment request message, and determines the address of the SMF 1 based on the obtained subscription data and the NSSAI 1. The SMF 2 sends the connection establishment request message to the SMF 1 based on the address of the SMF 1, to establish the connection between the SMF 2 and the SMF 1. In this way, the SMF 2 can determine the address of the SMF 1, and establish the connection to the SMF 1, so that a network operator in the home area can obtain communication data of the terminal device, thereby helping improve interests of the network operator.

In FIG. 13, an example in which the first area is a home area, the second area is a roaming area, the first core network element in the first area is a PCF 1, the second core network element in the second area is a PCF 2, the terminal device is UE, the access network device is a RAN, and a unified data management function network element is a UDM is used for description. For functions of the UE, the RAN, a network element selection function device, a storage function network element, the PCF 2 in the roaming area, and the PCF 1 and the UDM in the home area in FIG. 13, refer to the descriptions in the communication method 400. As shown in FIG. 13, the method 1300 includes the following steps.

S1301 to S1306 are respectively the same as S701 to S706 in FIG. 7, S1307 is the same as S708 in FIG. 7, and S1307 is an optional step. To avoid repetition, details are not described herein.

S1308: The network element selection function device sends a response message to the RAN for the network element discovery request message, and the RAN receives the response message from the network element selection function device for the network element discovery request message. The response message for the network element discovery request message includes the address of the PCF 2.

S1309: The RAN sends a policy establishment request message to the PCF 2 based on the address of the PCF 2, and the PCF 2 receives the policy establishment request message from the RAN.

S1310: The PCF 2 sends the permanent identifier to the UDM, and the UDM receives the permanent identifier from the PCF 2.

Herein, if the first identifier included in S1301 is a temporary identifier, before S1310, the PCF 2 may obtain the permanent identifier from the storage function network element based on the first identifier.

S1311: The UDM sends the subscription data to the PCF 2, and the PCF 2 receives the subscription data from the UDM.

S1312: The PCF 2 determines an address of the PCF 1 based on the subscription data and the NSSAI 1.

For example, S1310 to S1312 may be Manner 4 in Case 1 of S430 in the communication method 400.

Herein, S1312 may also be: The PCF 2 receives, from the network element selection function device, the address that is of the PCF 1 and that is determined by the network element selection function device based on the subscription data. In this case, S1310 to S1312 are Manner 5 in Case 1 of S430 in the communication method 400.

S1313 and S1314 are respectively the same as S712 and S713 in FIG. 7. To avoid repetition, details are not described herein.

In the method 1300 in FIG. 13, the network element selection function device in the roaming area determines the address of the PCF 2 based on the NSSAI 2 and the subscription data. The RAN in the roaming area sends the policy establishment request message to the PCF 2 based on the address of the PCF 2. The PCF 2 obtains the subscription data from the UDM in the home area based on the first identifier in the policy establishment request message, and determines the address of the PCF 1 based on the obtained subscription data and the NSSAI 1. The PCF 2 sends the connection establishment request message to the PCF 1 based on the address of the PCF 1, to establish the connection between the PCF 2 and the PCF 1. In this way, the PCF 2 can determine the address of the PCF 1, and establish the connection to the PCF 1, so that a network operator in the home area can obtain communication data of the terminal device, thereby helping improve interests of the network operator.

It may be understood that the embodiments in FIG. 6 to FIG. 13 may be separately implemented, or may be implemented in combination. For example, the embodiment in FIG. 8 is combined with the embodiment in FIG. 10 (or the embodiment in FIG. 9 is combined with the embodiment in FIG. 11). In this case, after receiving indication information, the second core network element in the second area interacts with the storage function network element in the second area, and obtains the address of the first core network element in the first area from the storage function network element in the second area. The indication information has the same meaning as the first information in the embodiment in FIG. 8. In this way, the second core network element in the second area may determine, based on a requirement of the terminal device, whether to obtain the address of the first core network element in the first area. There are a plurality of manners of combining different embodiments, which are not listed one by one herein.

It should be noted that, not all the steps shown in the flowcharts of FIG. 6 to FIG. 13 are mandatory steps. Some steps may be deleted from the flowcharts based on an actual requirement, or another possible step may be added to the flowcharts based on an actual requirement. FIG. 6 to FIG. 13 mainly describe differences between different embodiments. For other content except the differences, reference may be made to each other in FIG. 6 to FIG. 13. In addition, in a same embodiment, reference may also be made to each other in different implementations or different examples.

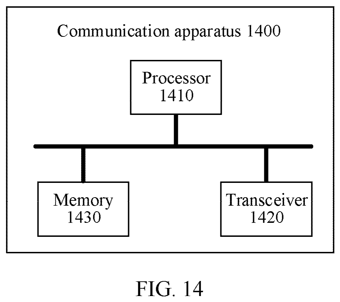

FIG. 14 shows a communication apparatus 1400 according to an embodiment of this application. The communication apparatus 1400 includes a processor 1410 and a transceiver 1420. The processor 1410 and the transceiver 1420 communicate with each other through an internal connection path, and the processor 1410 is configured to execute instructions, to control the transceiver 1420 to send a signal and/or receive a signal.

Optionally, the communication apparatus 1400 may further include a memory 1430. The memory 1430 communicates with the processor 1410 and the transceiver 1420 through the internal connection path. The memory 1430 is configured to store instructions, and the processor 1410 may execute the instructions stored in the memory 1430. In a possible implementation, the communication apparatus 1400 is configured to implement procedures and steps corresponding to the network element selection function device in the second area in the foregoing method embodiments. In another possible implementation, the communication apparatus 1400 is configured to implement procedures and steps corresponding to the SMF in the second area in the foregoing method embodiments. In still another possible implementation, the communication apparatus 1400 is configured to implement procedures and steps corresponding to the PCF in the second area in the foregoing method embodiments.

It should be understood that the communication apparatus 1400 may be specifically the network element selection function device, the SMF, or the PCF in the foregoing embodiments, or may be a chip or a chip system. Correspondingly, the transceiver 1420 may be a transceiver circuit of the chip. This is not limited herein. Specifically, the communication apparatus 1400 may be configured to perform steps and/or procedures corresponding to the network element selection function device, the SMF, or the PCF in the foregoing method embodiments. Optionally, the memory 1430 may include a read-only memory and a random access memory, and provide instructions and data for the processor. A part of the memory may further include a nonvolatile random access memory. For example, the memory may further store device type information. The processor 1410 may be configured to execute the instructions stored in the memory, and when the processor 1410 executes the instructions stored in the memory, the processor 1410 is configured to perform the steps and/or procedures corresponding to the network element selection function device, the SMF, or the PCF in the foregoing method embodiments.

In an implementation process, steps in the foregoing methods may be completed by an integrated logic circuit in a form of hardware or instructions in a form of software in the processor. The steps of the method disclosed with reference to embodiments of this application may be directly implemented by a hardware processor, or may be implemented by a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware in the processor. To avoid repetition, details are not described herein again.

It should be noted that the processor in embodiments of this application may be an integrated circuit chip and has a signal processing capability. In an implementation process, the steps in the foregoing method embodiments may be completed by an integrated logic circuit in a form of hardware or instructions in a form of software in the processor. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware in the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and method described in this specification includes but is not limited to these memories and any memory of another proper type.

According to the methods provided in embodiments of this application, this application further provides a computer program product. The computer program product includes computer program code. When the computer program code is run on a computer, the computer is caused to perform the steps or the procedures performed by the network element selection function device, the SMF, or the PCF in the foregoing method embodiments.

According to the methods provided in embodiments of this application, this application further provides a computer-readable storage medium. The computer-readable storage medium stores program code. When the program code is run on a computer, the computer is caused to perform the steps or the procedures performed by the network element selection function device, the SMF, or the PCF in the foregoing method embodiments.

According to the method provided in embodiments of this application, this application further provides a communication system, including one or more of the following network elements: the foregoing network element selection function device, the foregoing SMF, and the foregoing PCF.

Descriptions of the foregoing apparatus embodiments completely correspond to descriptions of the foregoing method embodiments. A corresponding module or unit performs a corresponding step. For example, a communication unit (a transceiver) performs a receiving step or a sending step in the method embodiments, and a processing unit (a processor) may perform a step other than the sending step or the receiving step. A function of a specific unit may be based on a corresponding method embodiment. There may be one or more processors.

In this application, "indication" may include a direct indication and an indirect indication, or may include an explicit indication and an implicit indication. Information indicated by specific information is referred to as to-be-indicated information. In a specific implementation process, the to-be-indicated information may be indicated in many manners. For example, without limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated according to an arrangement sequence of a plurality of pieces of information that is pre-agreed on (for example, stipulated in a protocol), to reduce indication overheads to some extent.

In embodiments of this application, the terms and English acronyms and abbreviations are all examples provided for ease of description, and should not constitute any limitation on this application. This application does not exclude a possibility of defining another term that can implement same or similar functions in an existing or future protocol.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenient and brief description, for a specific working process of the foregoing systems, apparatuses, and units, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be or may not be physically separate, and parts displayed as units may be or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

In the foregoing embodiments, all or some of the functions of the function units may be implemented by software, hardware, firmware, or any combination thereof. When software is used to implement the embodiments, all or a part of the embodiments may be implemented in a form of a computer program product. The computer program product includes one or more computer instructions (programs). When the computer program instructions (programs) are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the communication method is applied to a network element selection function device, and the communication method comprises:
obtaining an address of a first core network element in a first area, wherein the network element selection function device is located in a second area; and
sending first information, wherein the first information is used by a second core network element in the second area to obtain the address of the first core network element in the first area, and the second core network element in the second area transmits signaling of a terminal device based on the address of the first core network element in the first area; and the first core network element in the first area comprises a policy control function network element in the first area, and the second core network element in the second area comprises a policy control function network element in the second area; or the first core network element in the first area comprises a session management function network element in the first area, and the second core network element in the second area comprises a session management function network element in the second area, wherein
the first area is a home area of the terminal device, and the second area is a roaming area of the terminal device; or the first area is a roaming area of the terminal device, and the second area is a home area of the terminal device.

2. The communication method according to claim 1, wherein the first area is the home area of the terminal device, the second area is the roaming area of the terminal device, and the sending the first information comprises:
sending the first information to the second core network element in the second area via an access network device in the second area, wherein the first information indicates the address of the first core network element in the first area.

3. The communication method according to claim 1, wherein the first area is the home area of the terminal device, the second area is the roaming area of the terminal device, and the sending the first information comprises:
sending the first information to the second core network element in the second area via an access network device in the second area, wherein the first information indicates the second core network element in the second area to obtain the address of the first core network element in the first area.

4. The communication method according to claim 1, wherein the first area is the home area of the terminal device, the second area is the roaming area of the terminal device, and the sending the first information comprises:
sending the first information to a storage function network element in the second area, wherein the first information comprises the address of the first core network element in the first area, and the second core network element in the second area obtains the address of the first core network element in the first area from the storage function network element in the second area.

5. The communication method according to any one of claims 1 to 4, wherein the first area is the home area of the terminal device, the second area is the roaming area of the terminal device, and the communication method further comprises:
obtaining an address of the second core network element in the second area; and
sending second information to the access network device in the second area, wherein the second information indicates the address of the second core network element.

6. The communication method according to claim 5, wherein before the obtaining the address of the first core network element in the first area, the communication method further comprises:
obtaining a first identifier of the terminal device, first slice information of the first area, and second slice information of the second area; and
obtaining subscription data of the terminal device from a unified data management function network element in the first area based on the first identifier of the terminal device;
wherein the obtaining the address of the first core network element in the first area comprises:
determining the address of the first core network element in the first area based on the first slice information of the first area and the subscription data; and
wherein the obtaining the address of the second core network element in the second area comprises:
determining the address of the second core network element in the second area based on the second slice information of the second area and the subscription data.

7. The communication method according to claim 6, wherein the obtaining the subscription data of the terminal device from the unified data management function network element in the first area based on the first identifier of the terminal device comprises:
obtaining, from the storage function network element in the second area, a second identifier of the terminal device corresponding to the first identifier, wherein the storage function network element stores a correspondence between the first identifier and the second identifier, the first identifier is a temporary identifier of the terminal device, and the second identifier is a permanent identifier of the terminal device;
sending the second identifier to the unified data management function network element in the first area; and
receiving, from the unified data management function network element in the first area, the subscription data of the terminal device corresponding to the second identifier.

8. The communication method according to claim 7, wherein the sending the second identifier to the unified data management function network element in the first area comprises:
sending the second identifier to the unified data management function network element in the first area via a network element selection function device in the first area; and
wherein the receiving, from the unified data management function network element in the first area, the subscription data of the terminal device corresponding to the second identifier comprises:
receiving, from the unified data management function network element in the first area via the network element selection function device in the first area, the subscription data of the terminal device corresponding to the second identifier.

9. The communication method according to any one of claims 1 to 5, wherein the first area is the home area of the terminal device, the second area is the roaming area of the terminal device, and the obtaining the address of the first core network element in the first area comprises:
receiving, via the access network device in the second area, first slice information of the first area and a first identifier of the terminal device from the terminal device;
sending the first slice information of the first area and a second identifier of the terminal device to a network element selection function device in the first area, wherein the second identifier corresponds to the first identifier, the second identifier is a permanent identifier of the terminal device, and the first identifier is a temporary identifier of the terminal device; and
receiving, from the network element selection function device in the first area, the address of the first core network element in the first area, wherein the address is determined by the network element selection function device in the first area based on the first slice information of the first area and the second identifier.

10. A communication method, wherein the communication method is applied to a second core network element in a second area, and the communication method comprises:
obtaining an address of a first core network element in a first area, wherein the first core network element in the first area comprises a policy control function network element in the first area, and the second core network element in the second area comprises a policy control function network element in the second area; or the first core network element in the first area comprises a session management function network element in the first area, and the second core network element in the second area comprises a session management function network element in the second area; and
transmitting signaling of a terminal device based on the address of the first core network element, wherein
the first area is a roaming area of the terminal device, and the second area is a home area of the terminal device; or the first area is a home area of the terminal device, and the second area is a roaming area of the terminal device.

11. The communication method according to claim 10, wherein the first area is the home area of the terminal device, the second area is the roaming area of the terminal device, and the obtaining the address of the first core network element in the first area comprises:
receiving first information from a network element selection function in the second area via an access network device in the second area, wherein the first information indicates the address of the first core network element in the first area; and
determining the address of the first core network element in the first area based on the first information.

12. The communication method according to claim 10, wherein the first area is the home area of the terminal device, the second area is the roaming area of the terminal device, and the obtaining the address of the first core network element in the first area comprises:
receiving first information from an access network device in the second area, wherein the first information indicates the second core network element in the second area to obtain the address of the first core network element in the first area; and
obtaining, from a network element selection function device in the second area, the address of the first core network element in the first area.

13. The communication method according to claim 10, wherein the first area is the home area of the terminal device, the second area is the roaming area of the terminal device, and the obtaining the address of the first core network element in the first area comprises:
obtaining, from a storage function network element in the second area, the address of the first core network element in the first area.

14. The communication method according to claim 10, wherein the first area is the home area of the terminal device, the second area is the roaming area of the terminal device, and the obtaining the address of the first core network element in the first area comprises:
receiving, via an access network device in the second area, a first request message from the terminal device, wherein the first request message comprises first slice information of the first area and a first identifier of the terminal device;
obtaining subscription data of the terminal device from a unified data management function network element in the first area based on the first identifier of the terminal device; and
determining the address of the first core network element in the first area based on the first slice information of the first area and the subscription data.

15. The communication method according to claim 14, wherein the obtaining the subscription data of the terminal device from the unified data management function network element in the first area based on the first identifier of the terminal device comprises:
obtaining, from a storage function network element in the second area, a second identifier of the terminal device corresponding to the first identifier, wherein the storage function network element stores a correspondence between the first identifier and the second identifier, the first identifier is a temporary identifier of the terminal device, and the second identifier is a permanent identifier of the terminal device;
sending the second identifier to the unified data management function network element in the first area; and
receiving, from the unified data management function network element in the first area, the subscription data of the terminal device corresponding to the second identifier.

16. The communication method according to claim 10, wherein the first area is the home area of the terminal device, the second area is the roaming area of the terminal device, and the obtaining the address of the first core network element in the first area comprises:
obtaining a second identifier from a storage function network element in the second area, wherein the second identifier is a permanent identifier of the terminal device;
sending the second identifier to a unified data management function network element in the first area;
receiving, from the unified data management function network element in the first area, subscription data of the terminal device corresponding to the second identifier;
sending the subscription data to a network element selection function device in the second area; and
receiving, from the network element selection function device in the second area, the address of the first core network element in the first area, wherein the address is determined by the network element selection function device in the second area based on the subscription data.

17. A communication apparatus, comprising a processor, wherein the processor is coupled to a memory, and the processor is configured to execute a computer program or instructions stored in the memory, to cause the communication apparatus to implement the communication method according to any one of claims 1 to 9.

18. A communication apparatus, comprising a processor, wherein the processor is coupled to a memory, and the processor is configured to execute a computer program or instructions stored in the memory, to cause the communication apparatus to implement the communication method according to any one of claims 10 to 16.

19. A computer-readable storage medium, wherein the computer-readable storage medium stores a computer program, and when the computer program is executed by a processor, the method according to any one of claims 1 to 9 is implemented.

20. A computer-readable storage medium, wherein the computer-readable storage medium stores a computer program, and when the computer program is executed by a processor, the method according to any one of claims 10 to 16 is implemented.
